# EUROPEAN PATENT SPECIFICATION

(11) **EP 4 120 794 B1**
(45) Date of publication and mention of the grant of the patent: **29.10.2025**
(21) Application number: 20925328.5
(22) Date of filing: 07.09.2020
(51) Int. Cl.: H04W 72/12, H04W 4/80, H04W 88/06, H04W 84/12

(54) **ELECTRONIC DEVICE USING PLURALITY OF COMMUNICATION SCHEMES, AND CONTROL METHOD THEREFOR**
ELEKTRONISCHE VORRICHTUNG MIT MEHREREN KOMMUNIKATIONSSCHEMATA UND STEUERUNGSVERFAHREN DAFÜR
DISPOSITIF ÉLECTRONIQUE UTILISANT UNE PLURALITÉ DE SCHÉMAS DE COMMUNICATION ET SON PROCÉDÉ DE COMMANDE

(30) Priority: 19.03.2020 KR 20200033977
(43) Date of publication of application: 18.01.2023
(73) Proprietor: Samsung Electronics Co., Ltd., Gyeonggi-do 16677 (KR)
(72) Inventor: GU, Jaheon, Suwon-si Gyeonggi-do 16677 (KR); KIM, Moonsoo, Suwon-si Gyeonggi-do 16677 (KR); SEO, Mincheol, Suwon-si Gyeonggi-do 16677 (KR); LEE, Mingyu, Suwon-si Gyeonggi-do 16677 (KR); LEE, Youngkow, Suwon-si Gyeonggi-do 16677 (KR); CHOI, Bokun, Suwon-si Gyeonggi-do 16677 (KR)
(74) Representative: Gulde & Partner
(86) International application number: PCT/KR2020/012066
(87) International publication number: WO 2021/187695

(56) References cited:
- KR-A- 20100 057 661
- KR-A- 20110 120 773
- KR-A- 20190 136 961
- US-A1- 2007 066 314
- US-A1- 2008 224 869
- US-A1- 2010 226 348
- US-A1- 2018 103 392
- US-A1- 2018 176 857

## Description

### [Technical Field]

The present invention, generally, relate to an electronic device using a plurality of communication schemes and a method of controlling the same.

### [Background Art]

Recently, various network standard technologies have been introduced into various electronic devices including portable terminals.

For example, wireless fidelity (Wi-Fi) has newly extended a service frequency to a band of 6 GHz, and relevant new standards such as Wi-Fi Aware, 802.11ay, or 802.11ax are continuously being applied to portable terminals.

In another example, short-range communication for providing a short-range service, such as a vehicle smart key and an ultra-wideband (UWB) standard for precisely measuring a distance, are being applied to portable terminals. The UWB is communication standard using a broad band and uses a band of 3 GHz to 11 GHz, and the automobile industry and relevant industries aim to insert a vehicle key into a portable terminal on the basis of the corresponding standard.

UWB communication may be used for measuring a distance between two electronic devices, and a distance measurement scheme in a single-sided (SS) two-way ranging (TWR) type or a double-sided (DS)-TWR type is mainly used.

First, in the distance measurement scheme in the SS-TWR type, when an electronic device transmits ranging poll data, a counterpart electronic device may transmit ranging response data corresponding thereto and thus the electronic device may identify the distance from the counterpart electronic device. For example, the electronic device may know how far away the counterpart electronic device is from the electronic device on the basis of timestamp information for a time at which the ranging poll message is transmitted, timestamp information for a time at which the ranging response message is received, and a processing time (for example, information on a time from reception of the ranging poll message from the electronic device to transmission of the ranging response message) of the counterpart electronic device included in the ranging response message.

Subsequently, in the distance measurement scheme in the DS-TWR type, when the counterpart electronic device transmits ranging poll data, the electronic device may transmit ranging response data corresponding thereto, the counterpart electronic device may transmit ranging final data corresponding to the ranging response data, and the electronic device may identify the distance from the counterpart electronic device. For example, the electronic device may know the distance from the counterpart electronic device on the basis of timestamp information for a time at which the ranging response message is transmitted, timestamp information for a time at which the ranging final message is received, and a processing time (for example, information on a time from reception of the ranging response message from the electronic device to transmission of the ranging final message) of the counterpart electronic device included in the ranging final message.

Documents US 2007/066314A1, US 2010/226348A1, and US 2008/224869A1 disclose conventional In-device coexistence methods to mitigate interference between ultra-wideband (UWB) and Wi-Fi technologies co-located in the same electronic device.

### [Summary of the Invention]

### [Technical Problem]

In Wi-Fi, a frequency band for providing a service has expanded to a band of 6 GHz, and a UWB is preparing the beginning of a new service in a band of 6 GHz to 8 GHz in order to provide a smart key function for a vehicle.

The Wi-Fi and the UWB are network standards independent from each other, and may be provided by portable terminals for different services. For example, in a portable terminal, Wi-Fi may be used as the standard for high-rate wireless communication, and UWB may be used as the standard for precisely measuring a distance in a short-range.

Due to such a service different, Wi-Fi may provide a service with relatively high power, and UWB may provide a service with relatively low power compared to the Wi-Fi.

When the portable terminal simultaneously uses Wi-Fi and UWB in the same frequency band (for example, the band of 6 GHz), a UWB signal having relatively low power may receive very great influence by a Wi-Fi signal having high power. Further, various Wi-Fi signals having high power which exist outside the portable terminal may act as large interference to UWB communication used by the portable terminal.

In view of the aforesaid disadvantages, an object of the present invention may be to provide an electronic device and a method of operating the same that may control a communication circuit, which uses a different communication scheme, to stop transmitting and receiving communication signals and also make a request for stopping transmission and reception to an external electronic device using a communication scheme required to stop signal transmission and reception during an operation time of one communication circuit.

### [Technical Solution]

The present invention is defined by the appended set of claims. According to an embodiment of the present invention, an electronic device is provided, which includes a first communication circuit configured to support a ultra wide-band (UWB) communication scheme, a second communication circuit configured to support a Wi-Fi communication scheme, and a processor operatively connected to the first communication circuit and the second communication circuit, wherein the second communication circuit is configured to acquire operation time information and channel information of the first communication circuit from at least one of the process or the first communication circuit, generate a signal for stopping Wi-Fi communication of the second communication circuit, based on the acquired operation time information of the first communication circuit, transmit the signal for stopping the Wi-Fi communication to at least one external device through at least one channel of the second communication circuit overlapping a channel of the first communication circuit, based on the channel information, and stop transmitting and receiving a Wi-Fi signal, based on the operation time information of the first communication circuit, and the first communication circuit is configured to transmit a UWB signal to a first external device among the at least one external device, based on the operation time information of the first communication circuit while the second communication circuit stops transmitting and receiving the Wi-Fi signal.

According to another embodiment of the present invention, a method of controlling an electronic device is provided, which includes acquiring operation time information and channel information of a first communication circuit supporting a UWB communication scheme of the electronic device from at least one of a process of the electronic device or the first communication circuit by a second communication circuit supporting a Wi-Fi communication scheme, generating a signal for stopping Wi-Fi communication of the second communication circuit, based on the acquired operation time information of the first communication circuit, transmitting the signal for stopping the Wi-Fi communication to at least one external device through at least one channel of the second communication circuit overlapping a channel of the first communication circuit, based on the channel information, stopping transmitting and receiving a Wi-Fi signal of the second communication circuit, based on the operation time information of the first communication circuit, and transmitting a UWB signal to a first external device among the at least one external device, based on the operation time information of the first communication circuit while the second communication circuit stops transmitting and receiving the Wi-Fi signal.

### [Advantageous Effects]

According to the present invention, when an electronic device simultaneously providing a UWB function and a Wi-Fi function uses UWB communication in a band of 6 GHz, interference between a Wi-Fi signal of the electronic signal and Wi-Fi signals and UWB signals of neighbor devices can be reduced.

According to the present invention, it is possible to improve reliability of UWB communication of the electronic device by reducing quality deterioration of the UWB communication generated by Wi-Fi communication.

### [Brief Description of Drawings]

FIG. 1 is a block diagram illustrating an electronic device within a network environment according to an embodiment;
FIG. 2 is a block diagram illustrating an electronic device according to an embodiment;
FIG. 3 is a flowchart illustrating a method of operating an electronic device according to a claimed embodiment;
FIG. 4 is a sequence diagram illustrating a method of operating an electronic device according to a claimed embodiment;
FIG. 5 is a sequence diagram illustrating a method of operating an electronic device according to a claimed embodiment;
FIG. 6 is a flowchart illustrating a method of operating an electronic device according to an embodiment;
FIG. 7 is a sequence diagram illustrating a method of operating an electronic device according to an embodiment;
FIG. 8 is a sequence diagram illustrating a method of operating an electronic device according to an embodiment;
FIG. 9 is a sequence diagram illustrating a method of operating an electronic device according to an embodiment; and
FIG. 10 is a sequence diagram illustrating a method of operating an electronic device according to an embodiment.

### [Mode for Carrying out the Invention]

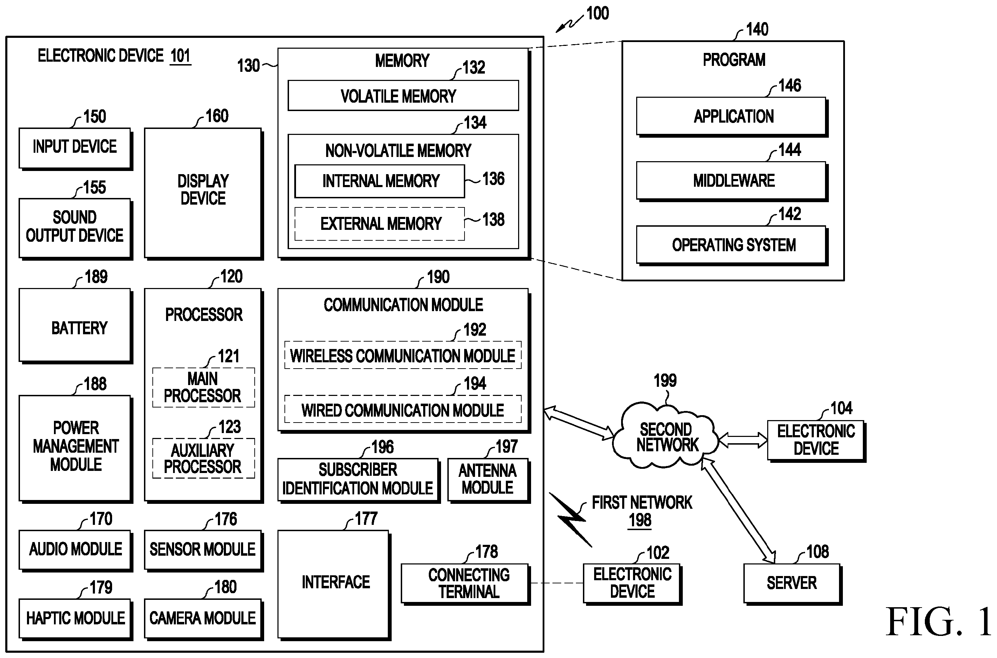

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input device 150 may receive a command or data to be used by a component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, or projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module may include an antenna including a radiating element composed of a conductive material or a conductive pattern formed in or on a substrate (e.g., PCB). According to an embodiment, the antenna module 197 may include a plurality of antennas. In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

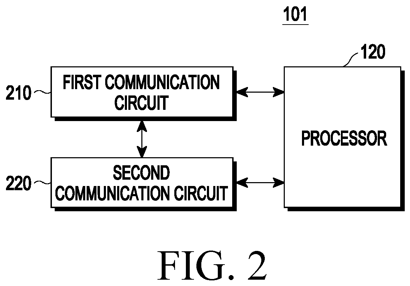

FIG. 2 is a block diagram illustrating an electronic device according to an embodiment.

Referring to FIG. 2, the electronic device 101 (for example, the electronic device 101 of FIG. 1) includes a first communication circuit 210, a second communication circuit 220, and the processor 120 (for example, the processor 120 of FIG. 1).

According to various embodiments, the first communication circuit 210 (for example, the wireless communication module 192) supports a UWB communication scheme using a wide frequency band (for example, 3.1 GHz to 10.6 GHz) according to the standard of 802.15.4z.

According to various embodiments, the first communication circuit 210 is operatively connected to the processor 120. For example, the first communication circuit 210 may provide information on the first communication circuit 210 to the processor 120 through communication with the processor 120, receive a control command from the processor 120, and perform an operation accordingly thereto.

According to various embodiments, the first communication circuit 210 directly provides information on the first communication circuit 210 without any intervention of the processor 120 to a second communication circuit 220 (for example, the wireless communication module 192).

According to various embodiments, the information on the first communication circuit 210 includes at least one piece of operation time information and/or channel information for UWB data communication or UWB ranging. For example, the information on the first communication circuit 210 may include at least one piece of start time information, duration information, or channel information for UWB data communication. Alternatively, the information on the first communication circuit 210 may include at least one piece of start time information, duration information, or channel information for UWB ranging.

For convenience of description, the first communication circuit 210 may be referred to as a UWB module hereinafter.

According to various embodiments, the second communication circuit 220 supports a Wi-Fi communication scheme according to the standard of 802.11 and is operatively connected to the processor 120. For example, the second communication circuit 220 may provide information on the second communication circuit 220 to the processor 120 through communication with the processor 120, receive a control command from the processor 120, and perform an operation accordingly thereto.

According to various embodiments, the second communication processor 220 directly receives the information on the first communication circuit 210 from the first communication circuit 210 without intervention of the processor 120 and may operate on the basis of the information on the first communication circuit 210 without any control of the processor 120.

According to various embodiments, the second communication circuit 220 generates a signal for stopping Wi-Fi communication on the basis of at least one piece of the acquired operation time information and channel information of the first communication circuit 210. According to various embodiments, the second communication circuit 220 may further include an ID or an address for uniquely identifying itself and generate a signal for stopping Wi-Fi communication.

For example, the second communication circuit 220 may generate a signal including a network allocation vector (NAV) configuration frame for stopping Wi-Fi communication for a time during which the first communication circuit 210 operates on the basis of operation time information of the first communication circuit 210. In another embodiment, the second communication circuit 220 may generate a signal including only operation time information of the first communication circuit 210. When the signal for stopping Wi-Fi communication includes only the operation time information of the first communication circuit 210 (for example, at least one piece of start time information, duration information, or period information for the operation of the first communication circuit 210), each electronic device receiving the signal for stopping Wi-Fi communication may configure the NAV by itself.

The network allocation vector (NAV) is a value serving as a kind of medium (for example, channel or frequency band) usage reservation timer, and may be a value including time information for usage reservation of a wireless medium defined in the wireless LAN standard of 802.11.

The NAV may perform a virtual carrier detection function similar to physical carrier detection in the Wi-Fi network, and a radio node (for example, a device) to transmit data may consider that a radio medium is occupied by another node and delay the transmission until the NAV value in a listened Duration/ID field within a 802.11 MAC frame becomes 0, and as a result, the NAV may perform a transmission standby function according to reservation to use the radio medium.

The NAV may be mainly used for a procedure of exchanging ready to send (RTS)/clear to send (CTS), and when a transmission/reception wireless terminal device calculates a channel occupation duration time, insert the time into RTS and CTS frame headers (duration/ID field), and transmit the headers, all of the remaining wireless terminal devices except for the wireless terminal device transmitting and receiving the RTS and CTS frames configure an NAV timer and postpone access to a wireless medium until the NAV becomes 0.

The role of the RTS frame in wireless LAN 802.11 is to reserve a radio link for transmission of a transmitting side, and may allow the transmitting side to make a request for configuring the stop of transmission from now to all nodes listening to the radio link. The role of the CTS frame in wireless LAN 802.11 is to allow a receiving side to make a request for configuring the stop of transmission from now to all nodes listening to the radio link.

The NAV-Set frame may have predetermined HEAD and TAIL, and may include Duration information and ID (address) information of the Wi-Fi module. The Duration information is a field indicating a time during which the NAV should be configured and may be determined in consideration of time information required for ranging by the UWB module. The ID (address) information of the Wi-Fi module may indicate a unique identifier or address of the Wi-Fi module of the electronic device. According to an embodiment, a MAC address of the Wi-Fi module of the electronic device may be used for the ID field of the Wi-Fi module.

According to various embodiments, the second communication circuit 220 transmits a signal for stopping Wi-Fi communication to an external device. For example, the second communication circuit 220 transmits the signal for stopping Wi-Fi communication to at least one external device through at least one channel of the second communication circuit 220 overlapping the first communication circuit 210 on the basis of channel information of the first communication circuit 210.

According to various embodiments, the second communication circuit 220 stops transmitting and receiving a Wi-Fi signal of the second communication circuit 220 on the basis of operation time information of the first communication circuit 210. For example, the second communication circuit 220 may configure a 802.11 NAV vector for the corresponding channel during a time required for performing UWB communication or UWB ranging on the basis of operation time information of the first communication circuit 210.

According to an embodiment, the time required for UWB communication or UWB ranging may be acquired through a sum of a signal propagation time and a turnaround time. For example, since two signal transmissions and one turnaround are generated during UWB communication or the UWB ranging process in the SS-TWR type, the time required for the UWB communication or the UWB ranging may be a sum of the two-propagation time and the one turnaround time. In another example, since four signal transmissions and three turnarounds are generated during UWB communication or the UWB ranging process in the DS-TWR type, the time required for the UWB communication or the UWB ranging may be a sum of the four-propagation time and the three-turnaround time. According to an embodiment, the turnaround time may include a processing time, may be defined as 4, 8, 16, or 32 *µ*s, and may be included in a header of a UWB ranging signal.

For convenience of description, the second communication circuit 220 may be referred to as a Wi-Fi module hereinafter.

The processor 120 is an element configured to control the electronic device, being operatively connected to the first communication circuit 210 and the second communication circuit 220, and may be referred to as an application processor.

According to various embodiments, the processor 120 may control the first communication circuit 210 and/or the second communication circuit 220 through communication such as peripheral component interconnect express (PCIe), and may receive and process information on the first communication circuit 210 and/or the second communication circuit 220. Further, the first communication circuit 210 and the second communication circuit 220 may transmit and receive data through a predetermined interface. For example, the processor 120 may receive information on the first communication circuit 210 and calculate time information for UWB communication and time information or period information for UWB ranging.

According to various embodiments, the processor 120 may control the second communication circuit 220 through communication such as PCIe, receive information on the second communication circuit 220 and operation-related information from the second communication circuit 220, and process the same.

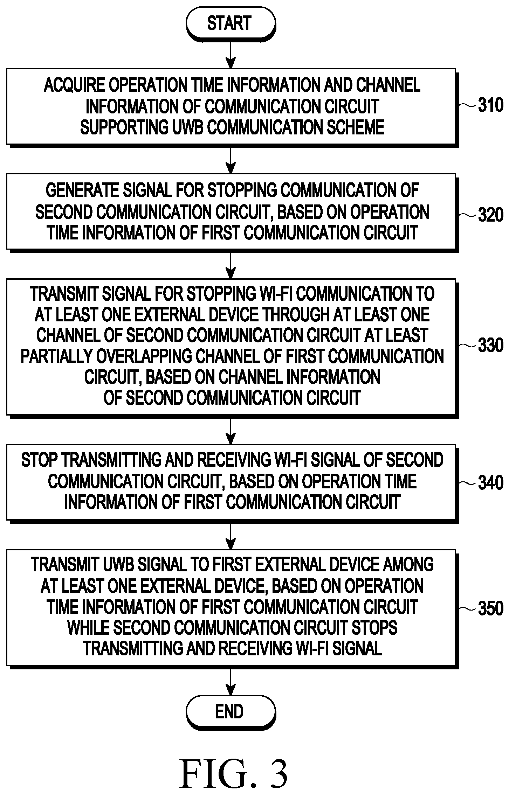

FIG. 3 is a flowchart illustrating a method of operating an electronic device according to an embodiment.

According to various embodiments, the electronic device 101 acquires operation time information and channel information of a first communication circuit (for example, the first communication circuit 210 of FIG. 2) supporting a UWB communication scheme in operation 310.

For example, a second communication circuit (for example, the second communication circuit 220 of FIG. 2) directly acquires operation time information and channel information of the first communication circuit 210 from the first communication circuit 210 and acquire operation time information and channel information of the first communication circuit 210 which the first communication circuit 210 provides to a processor (for example, the processor 120 of FIG. 1 or FIG. 2) from the processor 120.

According to various embodiments, the information on the first communication circuit 210 acquired by the second communication circuit 220 may include at least one piece of information on UWB data communication or information on UWB ranging. For example, the information on UWB data communication may include at least one piece of UWB data communication start time information, duration information, or channel information. In another example, the information on UWB ranging may include at least one piece of UWB ranging start time information, duration information, period information, or channel information.

According to various embodiments, the electronic device 101 generates a signal for stopping communication of the second communication circuit 220 on the basis of the operation time information of the first communication circuit in operation 320. For example, the second communication circuit 220 may generate the signal for stopping communication of the second communication circuit 220 on the basis of the acquired operation time information of the first communication circuit.

According to various embodiments, the signal for stopping communication of the second communication circuit 220 may be a signal including a network allocation vector (NAV) configuration frame for stopping Wi-Fi communication for a time during which the first communication circuit 210 operates (for example, a time during which a communication signal is transmitted and/or a time during which a communication signal is received) on the basis of the operation time information of the first communication circuit 210. According to an embodiment, the signal for stopping communication of the second communication circuit 220 may include only operation time information of the first communication circuit 210. When the signal for stopping communication of the second communication circuit 220 includes only the operation time information of the first communication circuit 210, each electronic device (for example, the electronic device 102 of FIG. 2) receiving the signal for stopping Wi-Fi communication may configure the NAV by itself.

According to various embodiments, operation 310 and operation 320 may be implemented such that the processor 120 controls the second communication circuit 220 or the second communication circuit 220 operates without intervention of the processor 120. For example, the processor 120 may determine whether to trigger UWB ranging according to a request of an application installed in a memory (for example, the memory 130 of FIG. 1) of the electronic device 101. According to an embodiment, an application performing an operation of a vehicle smart key installed in the electronic device 101 may make a request for UWB ranging to the processor 120, and the processor 120 may actively trigger the UWB ranging according to a determined period.

The UWB ranging operation is an operation of measuring a distance between the electronic device 101 and an external electronic device (for example, the electronic device 102 of FIG. 1) while exchanging a UWB signal with the external electronic device (for example, the electronic device 102 of FIG. 1) and may be divided into an active UWB ranging operation and a passive UWB ranging operation according to an entity triggering the distance measurement operation.

The active UWB ranging operation means that the electronic device 101 performs an initial operation for measuring (ranging) the distance from the external electronic device (for example, the electronic device 102 of FIG. 1), and the passive UWB ranging operation means that the electronic device 101 performs a ranging-related operation in response to a distance measurement request transmitted from the external electronic device (for example, the electronic device 102 of FIG. 1).

According to various embodiments, when active or passive UWB ranging is performed, the processor 120 may exchange information with the first communication circuit 210 supporting the UWB communication scheme. For example, when active UWB ranging is performed, the processor 120 may receive a ranging period from an application making a request for UWB ranging or may determine a required ranging period through an algorithm within the processor 120. For example, when the application making the request for UWB ranging is a vehicle smart key application, the processor 120 may determine the ranging period as 96 ms on the basis of a car connectivity consortium (CCC) rule.

According to an embodiment, the processor 120 may transfer the determined UWB ranging period information to the first communication circuit 210.

According to another embodiment, the first communication circuit 210 may receive UWB ranging performance time information for performing UWB communication and UWB ranging channel-related information during the active or passive UWB ranging operation process with the external electronic device (for example, the electronic device 102 of FIG. 1), and the first communication circuit 210 may transmit the same to the processor 120 or the second communication circuit 220.

According to an embodiment, through the second communication circuit 220, the electronic device 101 transmits a signal for stopping Wi-Fi communication to at least one external electronic device through at least one channel of the second communication circuit 220 that at least partially overlaps a channel of the first communication circuit 210 on the basis of channel information of the second communication circuit 220 in operation 330. For example, at least one channel of the second communication circuit 220 that at least partially overlaps the channel of the first communication circuit 210 may include a channel influencing (for example, signal interference) the channel of the first communication circuit 210.

For example, the electronic device 101 may transmit the NAV configuration frame corresponding to a time at which a UWB signal is transmitted to neighbor electronic devices through the channel of the second communication circuit 220 that at least partially overlaps the channel for performing UWB ranging through the second communication circuit 220, and may prevent the neighbor electronic devices receiving the NAV configuration frame and supporting Wi-Fi from transmitting Wi-Fi signal in the corresponding channel while the electronic device 101 (for example, the first communication circuit 210) transmits the UWB ranging signal.

According to various embodiments, the electronic device 101 transmits a signal for stopping Wi-Fi communication to at least one external device through at least one channel of the second communication circuit 220 overlapping the first communication circuit 210 on the basis of channel information of the first communication circuit 210 through the second communication circuit 220. For example, the external devices to which the signal for stopping Wi-Fi communication is transmitted may include at least one of an external device related to UWB communication or an external device irrelevant to UWB communication.

In an embodiment, when the channel of the first communication circuit 210 is larger than the channel of the second communication circuit 220, the electronic device 101 may transmit the signal for stopping Wi-Fi communication to the external device through all channels of the second communication circuit 220 that completely or partially overlap the channel of the first communication circuit 210.

Meanwhile, when the channel of the first communication circuit 210 is smaller than the channel of the second communication circuit 220, the electronic device 101 may transmit the signal for stopping Wi-Fi communication to the external device through one channel of the second communication circuit 220 including the channel of the first communication circuit 210.

According to various embodiments, operation 330 may be implemented such that the processor 120 controls the second communication circuit 220.

The external devices receiving the signal for stopping the Wi-Fi communication from the electronic device 101 may stop transmitting and receiving the Wi-Fi signal on the basis of operation time information of the first communication circuit 210 of the electronic device 101 included in the signal for stopping the Wi-Fi communication.

According to various embodiments, the electronic device 101 stops transmitting and receiving the Wi-Fi signal of the second communication circuit 220 on the basis of the operation time information of the first communication circuit 210 in operation 340. For example, the second communication circuit 220 may configure a 802.11 NAV vector for the corresponding channel while UWB communication or UWB ranging is performed on the basis of operation time information of the first communication circuit 210. According to various embodiments, operation 340 may be implemented such that the processor 120 controls the second communication circuit 220.

According to various embodiments, the electronic device 101 transmits a UWB signal to a first external device (for example, an external device to perform UWB communication) among at least one external device on the basis of operation time information of the first communication circuit 210 through the first communication circuit 210 while the second communication circuit 220 stops transmitting and receiving the Wi-Fi signal in operation 350. According to various embodiments, operation 350 may be implemented such that the processor 120 controls the second communication circuit 210. For example, after transmitting the signal including the NAV configuration frame through the identified channel, the second communication circuit 220 may inform the processor 120 that the transmission is completed. When receiving an event indicating that transmission of the NAV configuration frame is completed from the second communication circuit 220, the processor 120 may instruct the first communication circuit 210 to perform scheduled UWB data communication or UWB ranging. When active UWB ranging is performed, the first communication circuit 210 may perform ranging through an algorithm such as SS-TWR, DS-TWR, or DS-TWR with three messages. When passive UWB ranging is performed, the first communication circuit 210 may perform ranging according to a ranging algorithm of the external electronic device triggering the ranging.

According to the embodiment, the electronic device 101 may reduce the Wi-Fi signals in the UWB ranging band generated by the neighbor devices and perform UWB communication or UWB ranging with the external electronic device by using the time during which the Wi-Fi signals are reduced and thus interference decreases.

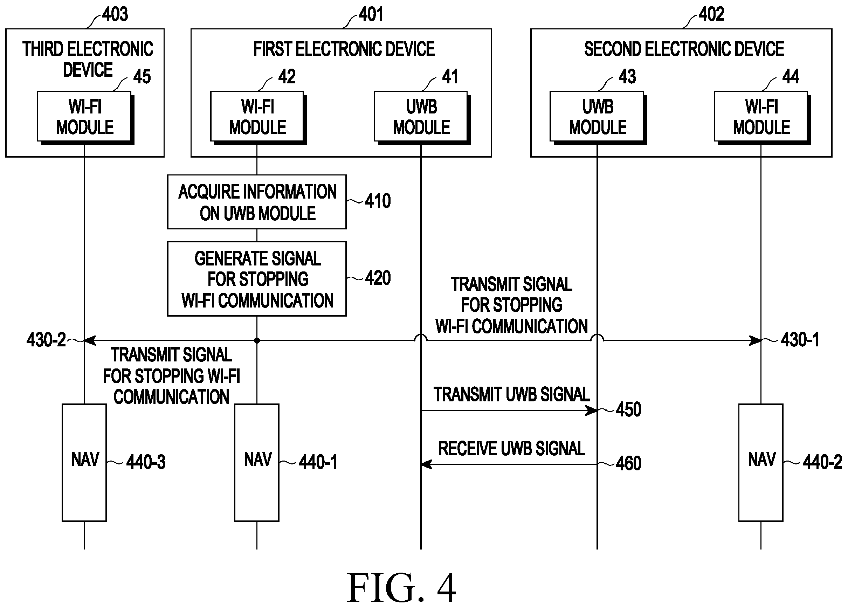

FIG. 4 is a diagram illustrating a method of operating an electronic device according to an embodiment.

According to an embodiment, a first electronic device 401 (for example, the electronic device 101 of FIG. 1 or FIG. 2) includes a UWB module 41 (for example, the first communication circuit 210 of FIG. 1) and a Wi-Fi module 42 (for example, the second communication circuit 220 of FIG. 2), a second electronic device 402 (For example, the electronic device 102 of FIG. 1) may include a UWB module 43 (for example, the first communication circuit 210 of FIG. 2) and a Wi-Fi module 44 (for example, the second communication circuit 220 of FIG. 2), and a third electronic device 403 (for example, the electronic device 102 of FIG. 1) may include a Wi-Fi module 45 (for example, , the second communication circuit 220 of FIG. 2).

According to various embodiments, the Wi-Fi module 42 of the first electronic device 401 acquires information on the UWB module 41 in operation 410. For example, the Wi-Fi module 42 of the first electronic device 401 may acquire information on the UWB module 41 from a processor (not shown) (for example, the processor 120 of FIG. 1 or FIG. 2) or the UWB module 41 of the first electronic device 401.

For example, the information on the UWB module 41 may be time information (for example, start time information or duration information) and channel information for UWB data communication or may be time information (for example, start time information, ranging duration information, or ranging period information) and channel information for UWB ranging.

In an embodiment, the processor of the first electronic device 401 may determine a UWB ranging period on the basis of a UWB ranging request received by an application and trigger active UWB ranging. The processor of the first electronic device 401 may transfer operation time information including a ranging request message and ranging period information to the UWB module 41. The UWB module 41 of the first electronic device 401 may determine a channel to perform ranging and transfer the channel to the processor of the first electronic device 401. The processor of the first electronic device 401 may transfer operation time information and channel information of the UWB module 41 to the Wi-Fi module 42.

According to various embodiments, the UWB module 41 of the first electronic device 401 may determine a channel to perform ranging and directly transfer the operation time information and channel information of the UWB module 41 to the Wi-Fi module 42.

According to various embodiments, the Wi-Fi module 42 of the first electronic device 401 generates a signal for stopping Wi-Fi communication in operation 420. For example, the Wi-Fi module 42 of the first electronic device 401 may generate a signal including an NAV configuration frame for stopping Wi-Fi communication of the external device or generate a signal including operation time information of the UWB module 41 to allow each external device receiving the signal for stopping Wi-Fi communication to configure the NAV by itself. For example, the Wi-Fi module 42 of the first electronic device 401 may include operation time information of the UWB module 41 in a header of a signal (for example, an RTS or CTS frame) transmitted and received to and from the external device.

According to various embodiments, when the signal for stopping Wi-Fi communication includes operation time information of the UWB module 41, the signal for stopping Wi-Fi communication may further include channel information of the UWB module 41. For example, the Wi-Fi module 42 of the first electronic device 401 may add channel information of the UWB module 41 to Mac Payload of the signal (for example, the RTS or CTS frame) transmitted and received to and from the external device.

According to various embodiments, the Wi-Fi module 42 of the first electronic device 401 transmits the signal for stopping Wi-Fi communication to the external device (for example, the Wi-Fi module 44 of the second electronic device 402 and/or the Wi-Fi module 45 of the third electronic device 403) in operation 430-2. For example, the Wi-Fi module 42 of the first electronic device 401 transmits the signal for stopping Wi-Fi communication to at least one external device through at least one channel of the Wi-Fi module 42 which overlaps channels of the UWB module 41 and is used by the first electronic device 401 on the basic of channel information of the UWB module 41 used by the first electronic device 401. The external devices to which the signal for stopping Wi-Fi communication may include at least one of an external device (for example, the second electronic device 402) related to UWB communication or an external device (for example, the third electronic device 403) irrelevant to UWB communication.

In an embodiment, when a bandwidth of the UWB module 41 is larger than a bandwidth of the Wi-Fi module 42, the Wi-Fi module 42 of the first electronic device 401 may identify all channels of the Wi-Fi module 42 which completely or partially overlap the bandwidth of the UWB module 41 as channels to transmit the signal for stopping Wi-Fi communication.

Meanwhile, when the bandwidth of the UWB module 41 is smaller than the bandwidth of the Wi-Fi module 42, the Wi-Fi module 42 of the first electronic device 401 may identify one channel of the Wi-Fi module 42 including the bandwidth of the UWB module 41 as a channel to transmit the signal for stopping Wi-Fi communication.

According to various embodiments, the Wi-Fi module 42 of the first electronic device 401 may transmit the signal (for example, 802.11 NAV-Set Frame) for stopping Wi-Fi communication to external devices (for example, the Wi-Fi module 44 of the second electronic device 402 and the Wi-Fi module 45 of the third electronic device 403) through the identified channel.

According to various embodiments, the Wi-Fi module 42 of the first electronic device 401 stops transmitting and receiving the Wi-Fi signal of the Wi-Fi module 42 on the basis of operation time information of the UWB module 41 in operation 440-1. For example, the Wi-Fi module 42 of the first electronic device 401 may configure the 802.11 NAV vector for the channel in which the signal for stopping Wi-Fi communication is transmitted while UWB communication or UWB ranging is performed on the basis of the operation time information of the UWB module 41.

According to various embodiments, the external devices (for example, the Wi-Fi module 44 of the second electronic device 402 and the Wi-Fi module 45 of the third electronic device 403) receiving the signal for stopping Wi-Fi communication may stop transmitting and receiving the Wi-Fi signal in operations 440-2 and 440-3. For example, each of the external devices (for example, the Wi-Fi module 44 of the second electronic device 402 and the Wi-Fi module 45 of the third electronic device 403) may configure the 802.11 NAV vector for the channel in which the signal for stopping Wi-Fi communication is received while UWB communication or UWB ranging is performed on the basis of the NAV configuration frame included in the received signal or the operation time information of the UWB module 41.

According to various embodiments, the UWB module 41 of the first electronic device 401 transmits a UWB signal to the UWB module 43 of the second electronic device 402 in operation 450 while Wi-Fi communication of the first electronic device 401, the second electronic device 402, and the third electronic device 403 is stopped. According to various embodiments, the UWB module 41 of the first electronic device 401 may receive the UWB signal from the UWB module 43 of the second electronic device 402 in operation 460.

According to an embodiment, the UWB module 41 of the first electronic device 401 may exchange a 802.15.4z ranging frame and a response message with the UWB module 43 of the second electronic device 402 according to the standard of 802.15.4z while Wi-Fi communication of the first electronic device 401, the second electronic device 402, and the third electronic device 403 is stopped. At this time, the ranging frame and the response message may vary depending on a ranging algorithm (for example, the SS-TWR, the DS-TWR, or the DS-TWR with three messages) defined in 802.15.4z. For example, when the SS-TWR is used, UWB ranging may be performed through operation 450 and operation 460. In another example, when the DS-TWR or the DS-TWR with three messages is used, UWB ranging may be performed through additional message transmission and reception as well as operation 450 and operation 460.

According to the embodiment, Wi-Fi signals in the UWB ranging band generated by neighbor devices may be reduced, and the first electronic device 401 may perform UWB communication or UWB ranging with the second electronic device 402 in the state in which interference is reduced using the time.

According to an embodiment, the Wi-Fi module 42 of the first electronic device 401 may periodically perform operation 420, operation 430-2, and operation 430-1 on the basis of time information (for example, start time information, ranging duration information, or ranging period information) for UWB ranging of the UWB module 41.

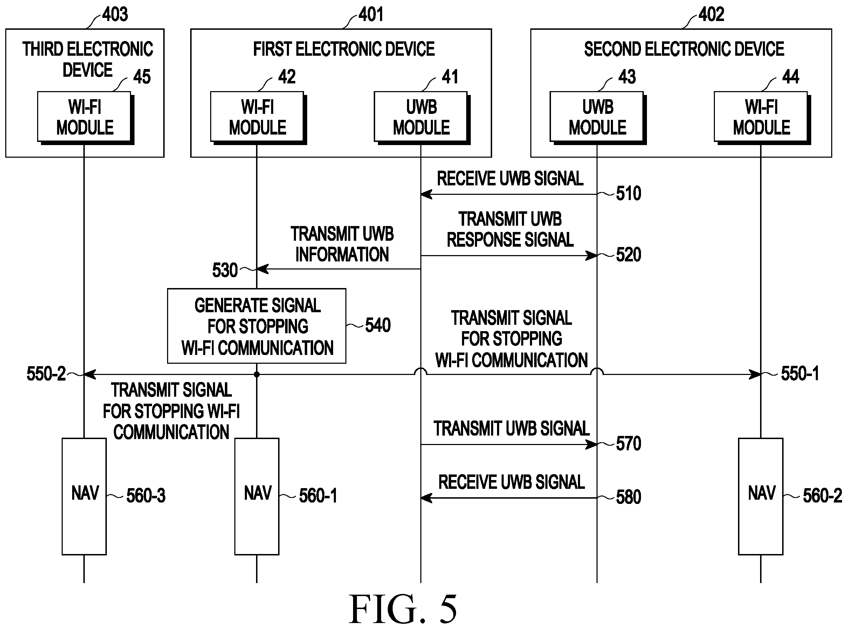

FIG. 5 is a diagram illustrating a method of operating an electronic device according to an embodiment.

Referring to FIG. 5, the first electronic device 401 may be a device to which a Wi-Fi signal control function is applied while the UWB signal is transmitted according to the disclosure, and the second electronic device 402 may be an electronic device to which the Wi-Fi signal control function is not applied while the UWB signal is transmitted according to the disclosure. According to an embodiment, when the first electronic device 401 receives the UWB signal from the second electronic device 402 in the state in which the signal for stopping Wi-Fi communication (for example, NAV-Set frame) is received from the second electronic device 402, it may be recognized that the second electronic device 402 is an electronic device to which the Wi-Fi signal control function is not applied while the UWB signal is transmitted according to the disclosure.

According to various embodiments, the UWB module 41 of the first electronic device 401 may receive the UWB signal from the UWB module 43 of the second electronic device 402 in operation 510. The UWB module 41 of the first electronic device 401 may transmit a UWB response signal to the UWB module 43 of the second electronic device 402 in operation 520. For example, the UWB module 41 of the first electronic device 401 may receive a signal including a UWB ranging frame from the UWB module 43 of the second electronic device 402 and transmit a UWB response signal to the UWB module 43 of the second electronic device 402.

According to various embodiments, the UWB module 41 of the first electronic device 401 may transfer UWB information (for example, information on UWB ranging or information on UWB communication) included in the UWB signal received by the Wi-Fi module 42 of the first electronic device 401 in operation 530. For example, the UWB module 41 of the first electronic device 401 may inform the Wi-Fi module 42 of the first electronic device 401 that passive UWB ranging is triggered and transfer information on the UWB ranging period and the channel of the UWB module 43 of the second electronic device 402 received from the UWB module 43 of the second electronic device 402.

According to an embodiment, the UWB module 41 of the first electronic device 401 may determine the UWB ranging period and directly transfer the information on the UWB ranging period and the channel to the Wi-Fi module 42 of the first electronic device 401. For example, the UWB module 41 of the first electronic device 01 may determine the UWB ranging period on the basis of the information on the UWB ranging period of the UWB module 43 of the second electronic device 402 received from the UWB module 43 of the second electronic device 402. In another embodiment, the UWB module 41 of the first electronic device 401 may determine the UWB ranging period on the basis of a plurality of UWB signals received from the UWB module 43 of the second electronic device 402.

In another embodiment, the UWB module 41 of the first electronic device 401 may transfer the information on the UWB ranging period and the channel to a processor (not shown) (for example, the processor 120 of FIG. 1 or FIG. 2) of the first electronic device 401, and the processor of the first electronic device 401 may transfer the information on the UWB ranging period and the channel to the Wi-Fi module 42 of the first electronic device 401. The UWB ranging period information may be calculated by the UWB module 41 of the first electronic device 401 or the processor of the first electronic device 401.

According to various embodiments, the Wi-Fi module 42 of the first electronic device 401 generates a signal for stopping Wi-Fi communication in operation 540. For example, the Wi-Fi module 42 of the first electronic device 401 may generate a signal including an NAV configuration frame for stopping Wi-Fi communication of the external device or generate a signal including operation time information of the UWB module 41 to allow each external device receiving the signal for stopping Wi-Fi communication to configure the NAV by itself. For example, the Wi-Fi module 42 of the first electronic device 401 may include operation time information of the UWB module 41 in a header of a signal (for example, an RTS or CTS frame) transmitted and received to and from the external device.

According to various embodiments, when the signal for stopping Wi-Fi communication includes operation time information of the UWB module 41, the signal for stopping Wi-Fi communication may further include channel information of the UWB module 41. For example, the Wi-Fi module 42 of the first electronic device 401 may add channel information of the UWB module 41 to Mac Payload of the signal (for example, the RTS or CTS frame) transmitted and received to and from the external device.

According to various embodiments, the Wi-Fi module 42 of the first electronic device 401 transmits the signal for stopping Wi-Fi communication to the external device (for example, the Wi-Fi module 44 of the second electronic device 402 and the Wi-Fi module 45 of the third electronic device 403) in operation 550-1 and operation 550-2.

For example, the Wi-Fi module 42 of the first electronic device 401 transmits the signal for stopping Wi-Fi communication to at least one external device through at least one channel of the Wi-Fi module 42 that overlaps the channel of the UWB module 41 and is used by the first electronic device 401 on the basis of channel information of the UWB module 41 used by the first electronic device 401 and/or the second electronic device 402. The external devices to which the signal for stopping Wi-Fi communication may include at least one of an external device (for example, the second electronic device 402) related to UWB communication or an external device (for example, the third electronic device 403) irrelevant to UWB communication. Since the operation of identifying the channel in which the signal for stopping Wi-Fi communication is transmitted is the same as the operation described with reference to FIG. 4, overlapping description is omitted.

According to various embodiments, the Wi-Fi module 42 of the first electronic device 401 may transmit the signal (for example, 802.11 NAV-Set Frame) for stopping Wi-Fi communication to external devices (for example, the Wi-Fi module 44 of the second electronic device 402 and the Wi-Fi module 45 of the third electronic device 403) through the identified channel.

According to various embodiments, the Wi-Fi module 42 of the first electronic device 401 stops transmitting and receiving the Wi-Fi signal of the Wi-Fi module 42 on the basis of operation time information of the UWB module 41 in operation 560-1. For example, the Wi-Fi module 42 of the first electronic device 401 may configure the 802.11 NAV vector for the channel in which the signal for stopping Wi-Fi communication is transmitted while UWB communication or UWB ranging is performed on the basis of the operation time information of the UWB module 41.

According to various embodiments, the external devices (for example, the Wi-Fi module 44 of the second electronic device 402 and the Wi-Fi module 45 of the third electronic device 403) receiving the signal for stopping Wi-Fi communication may stop transmitting and receiving the Wi-Fi signal in operations 560-2 and 560-3. For example, each of the external devices (for example, the Wi-Fi module 44 of the second electronic device 402 and the Wi-Fi module 45 of the third electronic device 403) may configure the 802.11 NAV vector for the channel in which the signal for stopping Wi-Fi communication is received while UWB communication or UWB ranging is performed on the basis of the NAV configuration frame included in the received signal or the operation time information of the UWB module 41.

According to various embodiments, the UWB module 41 of the first electronic device 401 transmits a UWB signal to the UWB module 43 of the second electronic device 402 in operation 570 and receive a UWB signal from the UWB module 43 of the second electronic device 402 in operation 580 while Wi-Fi communication of the first electronic device 401, the second electronic device 402, and the third electronic device 403 is stopped.

For example, when the signal for stopping Wi-Fi communication is completed transmitted, the UWB module 41 of the first electronic device 401 may perform the remaining ranging procedure of the UWB ranging triggered by operation 510 through operation 570 and operation 580. Accordingly, the UWB data communication or the ranging procedure using the UWB may be performed in a channel band having reduced interference from neighboring Wi-Fi signals.

In another embodiment, although FIG. 5 illustrates that the first electronic device 410 performs the UWB ranging procedure through operation 570 and operation 580, the second electronic device 402 may perform the remaining ranging procedure of the UWB ranging triggered by operation 510 when the signal for stopping Wi-Fi communication is completely transmitted by the Wi-Fi module 42 of the first electronic device 410.

According to an embodiment, when the second electronic device 402 completes the UWB ranging procedure of measuring the distance from the first electronic device 401 through operation 510 and operation 520 in which the UWB signal is received from the UWB module 43 of the second electronic device 402 and the signal for stopping Wi-Fi communication is completed transmitted, the UWB module 41 of the first electronic device 401 may perform the UWB ranging procedure with the second electronic device 402 through operation 570 and operation 580.

In another embodiment, when data is received from the second electronic device 402 through operation 510 in which the UWB signal is received from the UWB module 43 of the second electronic device 402 and the signal for stopping Wi-Fi communication is completely transmitted, the UWB module 41 of the first electronic device 401 may transmit response data in response to reception of the data in operation 510 to the second electronic device 402 through operation 570. In another embodiment, when data is received from the second electronic device 402 through operation 510 in which the UWB signal is received from the UWB module 43 of the second electronic device 402, the first electronic device 401 may know the UWB ranging period of the UWB module 43 of the second electronic device 402 on the basis of the UWB signal received through operation 510 and at least one previously received UWB signal. The first electronic device 401 may periodically transmit the signal (for example, NAV-Set frame) for stopping Wi-Fi communication to neighbor external devices according to the UWB ranging period of the second electronic device 402 on behalf of the second electronic device 402 to which the Wi-Fi signal control function is not applied while the UWB signal is transmitted. For example, before receiving the UWB signal periodically transmitted from the second electronic device 402, the first electronic device 401 may transmit the signal (for example, NAV-Set frame) for stopping Wi-Fi communication to neighbor external electronic devices, so as to reduce Wi-Fi signals in the UWB ranging band generated by neighbor devices, and the first electronic device 401 may receive the UWB ranging signal transmitted by the second electronic device 402 in the state in which interference is reduced. When the UWB ranging signal is not received from the second electronic device 401 for a predetermined time or longer, the first electronic device 401 may stop the operation of transmitting the signal (for example, NAV-Set frame) for stopping Wi-Fi communication on behalf of the second electronic device 402.

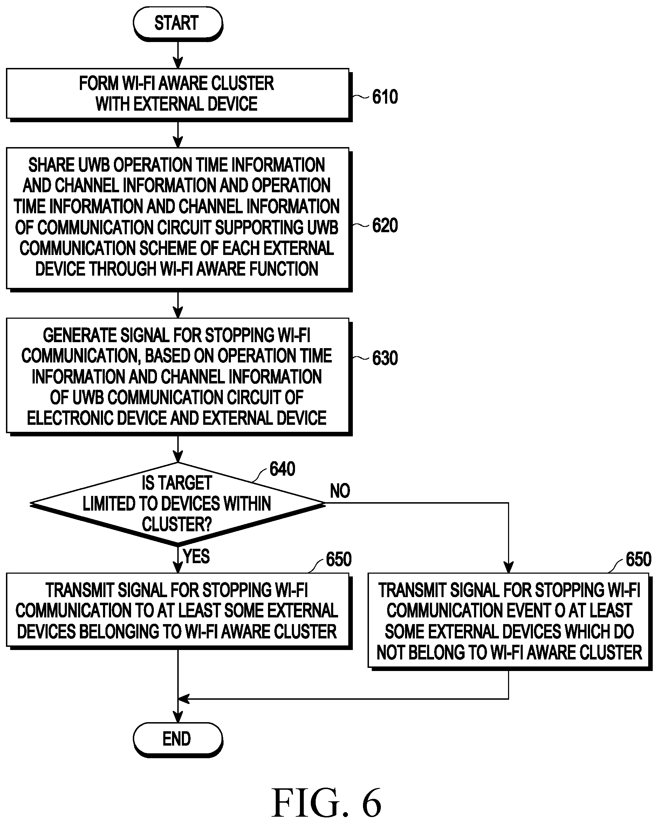

FIG. 6 is a flowchart illustrating a method of operating an electronic device according to an embodiment. According to various embodiments, the electronic device 101 may form a Wi-Fi Aware cluster with the external device and acquire UWB information (for example, information on UWB ranging or information on UWB communication).

Referring to FIG. 6, according to various embodiments, the electronic device 101 (for example, the processor 120 of FIG. 1 or FIG. 2 or the first electronic device 401 of FIG. 4) may form the Wi-Fi Aware cluster with at least one external device in operation 610. For example, the electronic device 101 may form the Wi-Fi Aware cluster with the external device (for example, the second electronic device 102 of FIG. 1 or the second electronic device 402 of FIG. 4) to perform UWB communication through the Wi-Fi module 220 (for example, the second communication circuit 220 of FIG. 2). According to various embodiments, the external device (for example, the second electronic device 102 of FIG. 1 or the third electronic device 403 of FIG. 4) irrelevant to UWB communication may also be included in the Wi-Fi Aware cluster.

According to various embodiments, the electronic device 101 (for example, the processor 120 of FIG. 1 or FIG. 2 or the Wi-Fi module 220) may share UWB operation time information and channel information, and operation time information and channel information of the UWB module supporting a UWB communication scheme of each external device through a Wi-Fi Aware function in operation 620. For example, the electronic device 101 may transmit a neighbor awareness networking (NAN) message including UWB operation time information and channel information of the UWB module 210 to the external device (for example, the second electronic device 402 of FIG. 4) through the Wi-Fi module 220. In another example, the electronic device 101 may receive the NAN message including operation time information and channel information of the UWB module (for example, the UWB module 221 of FIG. 4) of the external device from the external device. The electronic device 101 and respective external devices belonging to the Wi-Fi Aware cluster may share operation time information and channel information of the UWB modules of the electronic device 101 and the respective external devices.

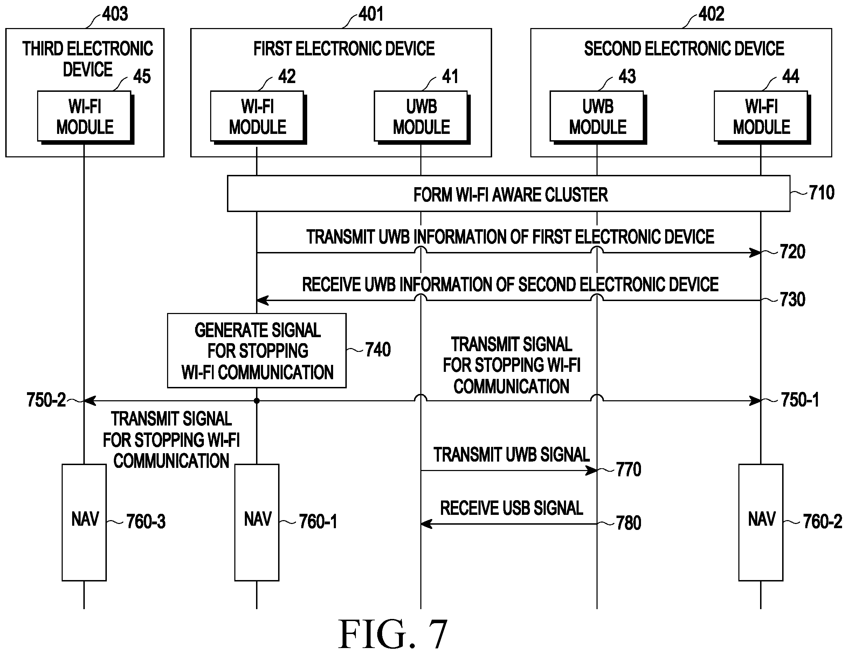

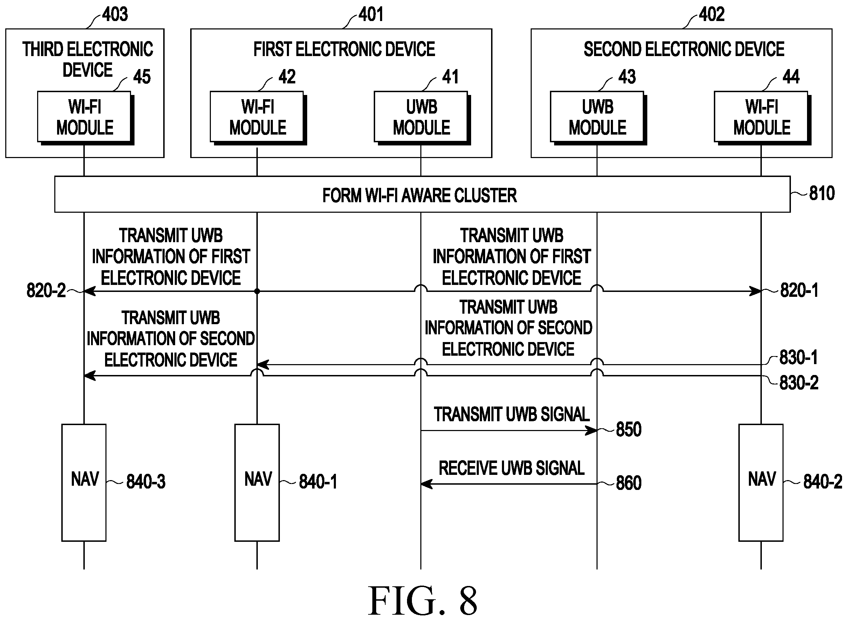

Although not illustrated in FIG. 6, the electronic device 101 may further include an operation of selecting an electronic device to transmit an RTS signal or a CTS-to-Self signal on the basis of the shared operation time information and channel information of the UWB modules of the electronic device 101 and the respective external devices. Hereinafter, in FIGs. 7 and 8, it is assumed that the first electronic device 101 is selected as the electronic device to generate and transmit a signal for stopping Wi-Fi communication. At this time, the signal for stopping Wi-Fi communication may be an RTS signal or a CTS-to-Self signal.

According to various embodiments, the electronic device 101 generates the signal for stopping Wi-Fi communication on the basis of operation time information and channel information of the UWB communication circuits of the electronic device 101 and the external device 102 in operation 630.

According to various embodiments, the electronic device 101 may determine whether to limit a target to transmit the signal for stopping Wi-Fi communication to an external device belonging to the cluster in operation 640.

According to an embodiment, when the target to transmit the signal for stopping Wi-Fi communication is limited to the external device belonging to the cluster (Y of operation 640), the electronic device 101 may transmit the signal for stopping Wi-Fi communication the at least some external devices belonging to the Wi-Fi Aware cluster in operation 650. For example, the electronic device 101 may transmit the signal for stopping Wi-Fi communication the at least some external devices belonging to the Wi-Fi Aware cluster by using a NAN data beacon frame through the Wi-Fi module 220.

According to another embodiment, when the target to transmit the signal for stopping Wi-Fi communication is not limited to the external device belonging to the cluster (N of operation 640), the electronic device 101 may transmit the signal for stopping Wi-Fi communication even to an external device which does not belong to the Wi-Fi Aware cluster in operation 650. For example, the electronic device 101 may transmit the signal for stopping Wi-Fi communication to at least some external devices which do not belong to the Wi-Fi Aware cluster through the Wi-Fi module 220.

The embodiment of forming the Wi-Fi Aware cluster, share UWB information, and control the stopping of the Wi-Fi communication is described in more detail with reference to FIGs. 7 and 8 below.

FIG. 7 is a diagram illustrating a method of operating an electronic device according to an embodiment.

As illustrated in FIG. 7, according to various embodiments, a processor (for example, the processor 120 of FIG. 1 or FIG. 2) of the first electronic device 401 may form a Wi-Fi Aware cluster with the external device related to UWB communication through the Wi-Fi module 42 in operation 710. For example, the processor (not shown) of the first electronic device 401 may form the Wi-Fi Aware cluster with the external device (for example, the second electronic device 402) to perform UWB communication through the Wi-Fi module 42.

According to an optional embodiment, the processor of the first electronic device 401 may transmit UWB information (for example, information on UWB ranging or information on UWB communication) of the first electronic device 401 through a Wi-Fi Aware function in operation 720 and receive UWB information (for example, information on UWB ranging or information on UWB communication) of the second electronic device 402 through the Wi-Fi Aware function in operation 730, so as to share operation time information and channel information of the UWB module of each device. For example, the processor of the first electronic device 401 may transmit a NAN message including UWB operation time information and channel information of the UWB module 41 to the external device (for example, the second electronic device 402) through the Wi-Fi module 42 and receive a NAN message including operation time information and channel information of the UWB module (for example, the UWB module 43 of the second electronic device 402) of the external device from the external device (for example, the second electronic device 402), so as to share operation time information and channel information of the UWB modules of the first electronic device 401 and each external device. Accordingly, electronic devices (for example, the first electronic device 401 and the second electronic device 402) belonging to the Wi-Fi Aware cluster may acquire operation time information and channel information of the UWB modules of other electronic devices belonging to the Wi-Fi Aware cluster.

According to various embodiments, although FIG. 7 illustrates that each electronic device transmits UWB information to another electronic device and UWB information of each electronic device is shared, the UWB information of each electronic device may be shared through a method in which one master electronic device belonging to the Wi-Fi Aware cluster may receive UWB information of another electronic device belonging to the Wi-Fi Aware cluster and transmits the received UWB information of another electronic device and UWB information of the master electronic device to electronic devices belonging to the Wi-Fi Aware cluster.

According to an embodiment, when UWB information of each electronic device is managed by the master electronic device belonging to the Wi-Fi Aware cluster, if the operation using the UWB module is newly performed by another electronic device belonging to the Wi-Fi Aware cluster, another electronic device belonging to the Wi-Fi Aware cluster may inform the master electronic device that the operation using the UWB module is newly performed. According to an embodiment, as the master electronic device receives the notification indicating that another electronic device belonging to the Wi-Fi Aware cluster newly performs the operation using the UWB module, the master electronic device may update the UWB information of each electronic device and transmit the updated information to electronic devices belonging to the Wi-Fi Aware cluster.

According to various embodiments, the Wi-Fi module 42 of the first electronic device 401 generates a signal for stopping Wi-Fi communication on the basis of operation time information and channel information of at least one UWB communication circuit of the first electronic device 401 or the external device 402 in operation 740. For example, the Wi-Fi module 42 of the first electronic device 401 may generate a signal including a NAV configuration frame for stopping Wi-Fi communication of the external device.

According to various embodiments, the processor of the first electronic device 401 transmits the signal for stopping Wi-Fi communication to the Wi-Fi module (for example, the Wi-Fi module 44) of the external device (for example, the second electronic device 402) belonging to the Wi-Fi Aware cluster through the Wi-Fi module 42. For example, the processor of the first electronic device 101 may transmit the signal including the NAV configuration frame to the external device (for example, the electronic device 402) belonging to the Wi-Fi Aware cluster through the NAN data beacon frame.

According to an optional embodiment, the Wi-Fi module 42 of the first electronic device 401 may transmit the signal for stopping Wi-Fi communication to the Wi-Fi module (for example, the Wi-Fi module 45) of the external device (for example, the third electronic device 403) which does not belong to the Wi-Fi Aware cluster through the Wi-Fi module 42 in operation 750-2. For example, the Wi-Fi module 42 of the first electronic device 401 may transmit the signal including the NAV configuration frame to the external device (for example, the second electronic device 402) which does not belong to the Wi-Fi Aware cluster through a general Wi-Fi communication scheme. According to various embodiments, the Wi-Fi module 42 of the first electronic device 401 may transmit the signal including the NAV configuration frame even to the Wi-Fi module (for example, the Wi-Fi module (for example, the Wi-Fi module 44) of the external device (for example, the second electronic device 402) belonging to the Wi-Fi Aware cluster through the general Wi-Fi communication scheme.

According to various embodiments, the Wi-Fi module 42 of the first electronic device 401 stops transmitting and receiving the Wi-Fi signal of the Wi-Fi module 42 on the basis of operation time information (for example, information included in the NAV configuration frame or operation time information of the UWB module 41) of the UWB module 41 in operation 760-1. For example, the Wi-Fi module 42 of the first electronic device 401 may configure the 802.11 NAV vector for the channel in which the signal for stopping Wi-Fi communication is transmitted while UWB communication or UWB ranging is performed on the basis of the operation time information of the UWB module 41.

According to various embodiments, the external device (for example, the Wi-Fi module 44 of the second electronic device 402 or the Wi-Fi module 45 of the third electronic device 403) receiving the signal for stopping Wi-Fi communication from the first electronic device 401 may stop transmitting and receiving the Wi-Fi signal in operation 760-2 and operation 760-3. For example, each of the external devices (for example, the Wi-Fi module 44 of the second electronic device 402 and the Wi-Fi module 45 of the third electronic device 403) may configure the 802.11 NAV vector for the channel in which the signal for stopping Wi-Fi communication is received while UWB communication or UWB ranging is performed on the basis of the NAV configuration frame included in the signal received from the first electronic device 401 or the operation time information of the UWB module 41.

According to various embodiments, the UWB module 41 of the first electronic device 401 transmits the UWB signal to the UWB module 43 of the second electronic device 402 through the UWB module 41 in operation 770 while Wi-Fi communication of the first electronic device 401, the second electronic device 402, and the third electronic device 403 is stopped. In operation 780, the fist electronic device 401 may receive the UWB signal from the UWB module 43 of the second electronic device 402.

According to the above-described embodiment, it is possible to reduce Wi-Fi signals in the UWB ranging band generated by neighbor devices and to perform mutual UWB communication or UWB ranging by using the time in the state in which interference is reduced.

FIG. 8 is a diagram illustrating a method of operating an electronic device according to an embodiment.

As illustrated in FIG. 8, according to various embodiments, a processor (not shown) (for example, the processor 120 of FIG. 1 or FIG. 2) of the first electronic device 401 (for example, the electronic device 101) may form a Wi-Fi Aware cluster including not only an external device (for example, the second electronic device 402) related to UWB communication but also an external device (for example, the third electronic device 403) irrelevant to UWB communication through the Wi-Fi module 42 in operation 810.

According to various embodiments, the processor of the first electronic device 401 may transmit UWB information of the first electronic device 401 to the external device (for example, the second electronic device 402 or the third electronic device 403) belonging to the Wi-Fi Aware cluster through a Wi-Fi Aware function in operation 820-1 and operation 820-2. For example, the processor of the first electronic device 401 may transmit the NAN message including UWB operation time information and channel information of the UWB module 41 to the external device (for example, the second electronic device 402 or the third electronic device 403) through the Wi-Fi module 42.

According to various embodiments, the processor of the second electronic device 402 performing UWB communication with the first electronic device 401 may transmit UWB information of the second electronic device 402 to the external device (for example, the first electronic device 401 or the third electronic device 403) of the second electronic device 402 belonging to the Wi-Fi Aware cluster through the Wi-Fi Aware function in operation 830-1 and operation 830-2. For example, the processor of the second electronic device 402 may transmit the NAN message including UWB operation time information and channel information of the UWB module 43 to the external device (for example, the first electronic device 401 or the third electronic device 401) of the second electronic device 402 through the Wi-Fi module 44.

As described above, each electronic device (for example, the first electronic device 401, the second electronic device 402, or the third electronic device 403) belonging to the Wi-Fi Aware cluster may share UWB ranging period and channel information of the electronic device (for example, the first electronic device 401 or the second electronic device 402) to perform UWB communication. Further, each electronic device (for example, the first electronic device 401, the second electronic device 402, or the third electronic device 403) belonging to the Wi-Fi Aware cluster may stop transmitting and receiving the Wi-Fi signal of its own Wi-Fi module 42, 44, or 45 on the basis of the shared UWB information in operation 840-1, operation 840-2, and operation 840-3. For example, each electronic device (for example, the first electronic device 401, the second electronic device 402, or the third electronic device 403) belonging to the Wi-Fi Aware cluster may configure a 802.11 NAV vector overlapping the channel of UWB communication or UWB ranging of its own Wi-Fi module 42, 44, or 45 while UWB communication or UWB ranging is performed on the basis of the shared UWB operation time information of the first electronic device 401 and the second electronic device 402.

According to various embodiments, the UWB module 41 of the first electronic device 401 may transmit a UWB signal to the UWB module 43 of the second electronic device 402 in operation 850 while Wi-Fi communication of the first electronic device 401, the second electronic device 402, and the third electronic device 403 is stopped. According to various embodiments, the UWB module 41 of the first electronic device 401 may receive the UWB signal from the UWB module 43 of the second electronic device 402 in operation 860. For example, the UWB module 41 of the first electronic device 401 may transmit and receive at least one of a signal including UWB data or a signal including a UWB ranging frame to and from the UWB module 43 of the second electronic device 402 while Wi-Fi communication of the first electronic device 401, the second electronic device 402, and the third electronic device 403 is stopped.

As described above, according to the disclosure, it is possible to control the Wi-Fi module not to transmit and receive information in the channel in which the corresponding UWB module operates on the basis of operation time information of the UWB module and reduce propagation interference during an operation time (for example, UWB data communication or UWB ranging) of the UWB module through the control.

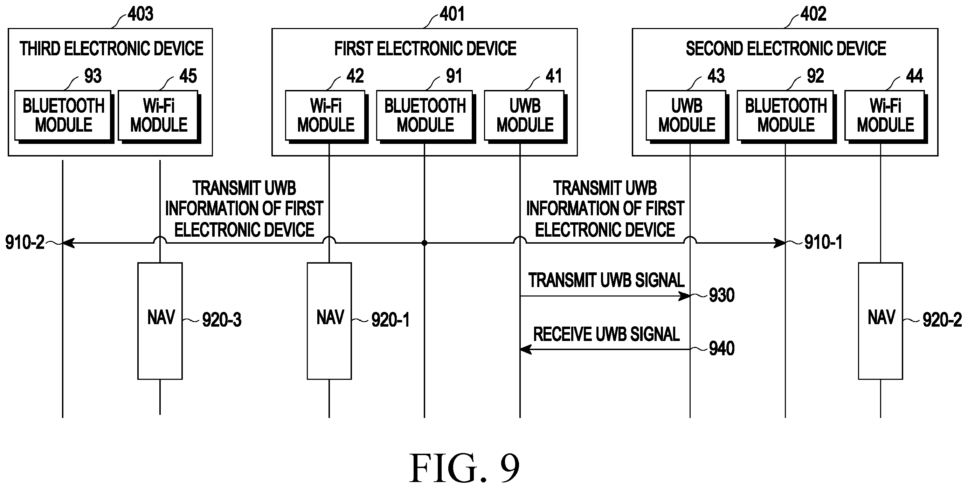

FIG. 9 is a diagram illustrating a method of operating an electronic device according to an embodiment.

According to various embodiments, as illustrated in FIG. 9, UWB information may be shared through the third communication scheme.

According to an embodiment, the first electronic device 401 (for example, the electronic device 101 of FIG. 1 or FIG. 2) may include the UWB module 41 (for example, the first communication circuit 210 of FIG. 2), the Wi-Fi module 42 (For example, the second communication circuit 220 of FIG. 2), and a Bluetooth module 91, the second electronic device 402 (for example, the electronic device 102 of FIG. 1) may include the UWB module 43 (for example, the first communication circuit 210 of FIG. 2), the Wi-Fi module 44 (for example, the second communication circuit 220 of FIG. 2), and a Bluetooth module 92, and the third electronic device 403 (for example, the electronic device 102 of FIG. 2) may include the Wi-Fi module 45 (for example, the second communication circuit 220 of FIG. 2) and a Bluetooth module 93.

According to various embodiments, a processor (not shown) (for example, the processor 120 of FIG. 1 or FIG. 2) of the first electronic device 401 may transmit UWB information of the first electronic device 401 to external devices (for example, the Bluetooth module 92 of the second electronic device 402 and the Bluetooth module 93 of the third electronic device 403) in operation 910-1 and operation 910-2. For example, after a UWB ranging period and a channel are determined, the processor of the first electronic device 401 may generate a Bluetooth low energy (BLE) frame including a UWB ranging period and channel information and control the Bluetooth module 91 to transmit the generated BLE frame to the external devices (for example, the Bluetooth module 92 of the second electronic device 402 and the Bluetooth module 93 of the third electronic device 403). In another example, the UWB module 41 of the first electronic device 401 may transmit operation time information and channel information of the UWB module 41 including the UWB ranging period information to the Bluetooth module 91, and the Bluetooth module 91 may generate the BLE frame on the basis of the received information.

According to various embodiments, the Wi-Fi module 42 of the first electronic device 401 may stop transmitting and receiving the Wi-Fi signal of the Wi-Fi module 42 on the basis of operation time information and channel information of the UWB module 41 including the UWB ranging period information in operation 920-1. For example, the Wi-Fi module 42 of the first electronic device 401 may configure a 802.11 NAV vector for the channel overlapping the channel in which UWB communication or UWB ranging is performed while UWB communication or UWB ranging is performed on the basis of operation time information and channel information of the UWB module 41.

According to various embodiments, the external devices (for example, the Bluetooth module 92 of the second electronic device 402 and the Bluetooth module 93 of the third electronic device 403) receiving the operation time information and the channel information of the UWB module 41 from the Bluetooth module 91 of the first electronic device 401 may transfer the received operation time information and channel information of the UWB module 41 to the Wi-Fi modules 44 and 45.

According to various embodiments, in operation 920-2 and operation 920-3, the Wi-Fi module 44 of the second electronic device 402 and the Wi-Fi module 45 of the third electronic device 403 receiving the operation time information and the channel information of the UWB module 41 may stop transmitting and receiving the Wi-Fi signal in operation 920-2 and operation 920-3. For example, each of the external devices (for example, the Wi-Fi module 44 of the second electronic device 402 and the Wi-Fi module 45 of the third electronic device 403) may configure the 802.11 NAV vector for the channel overlapping the channel in which UWB communication or UWB ranging is performed while UWB communication or UWB ranging is performed on the basis of the received operation time information and channel information of the UWB module 41 of the first electronic device 401.

According to various embodiments, the UWB module 41 of the first electronic device 401 may transmit a UWB signal to the UWB module 43 of the second electronic device 402 in operation 930 while Wi-Fi communication of the first electronic device 401, the second electronic device 402, and the third electronic device 403 is stopped. In operation 940, the first electronic device 401 may receive the UWB signal from the UWB module 43 of the second electronic device 402 through the UWB module 41.

According to the above-described embodiment, when transmitting and receiving the UWB signal, the first electronic device 401 may control transmission and reception of the Wi-Fi signals in the UWB ranging band generated by neighbor devices, and perform UWB communication or UWB ranging with the external device (for example, the second electronic device 402) in the state in which interference due to the Wi-Fi signals is reduced.

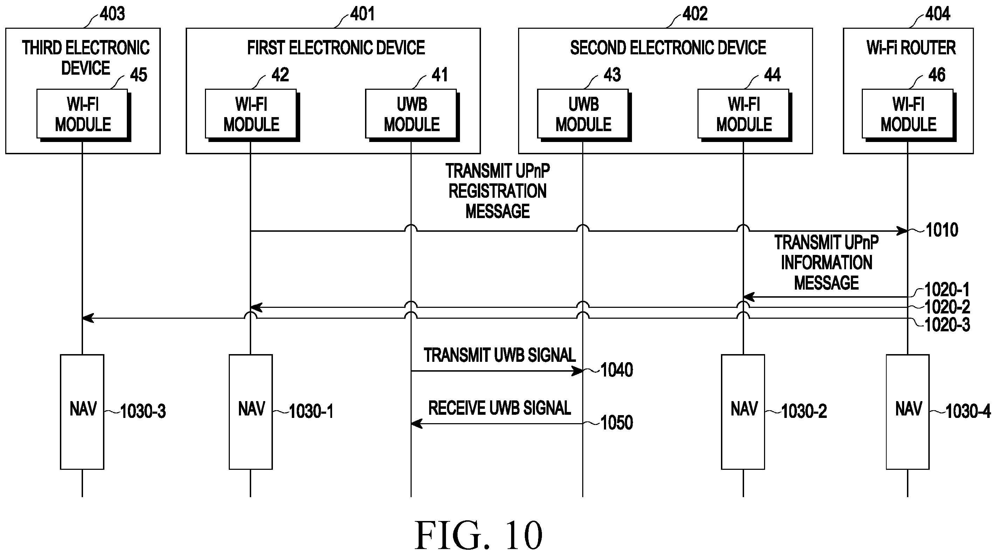

FIG. 10 is a diagram illustrating a method of operating an electronic device according to an embodiment.

According to an embodiment, the first electronic device 401 (for example, the electronic device 101 of FIG. 1 or FIG. 1) may include the UWB module 41 (for example, the first communication circuit 210 of Fig. 2) and the Wi-Fi module 42 (for example, the second communication circuit 220 of FIG. 2), the second electronic device 402 (for example, the electronic device 102 of FIG. 1) may include the UWB module 43 (for example, the first communication circuit 210 of FIG. 2) and the Wi-Fi module 44 (for example, the second communication circuit 220 of FIG. 1), the third electronic device 403 (for example, the electronic device 102 of FIG. 1) may include the Wi-Fi module 45 (for example, the second communication circuit 220 of FIG. 2), and a Wi-Fi router 404 may include a Wi-Fi module 46 (for example, the second communication circuit 220 of FIG. 2).

As illustrated in FIG. 10, according to an embodiment, the Wi-Fi module 42 of the electronic device 401 may transmit a universal plug and play (UPnP) (or digital living network alliance (DLNA)) registration message to the Wi-Fi module 46 of the Wi-Fi router 404 in operation 1010. For example, the Wi-Fi module 42 of the electronic device 401 may transmit the UPnP (or DLNA) registration message including operation time information (for example, the UWB ranging period) and channel information of the UWB module 41 to the Wi-Fi module 46 of the currently accessed Wi-Fi router 404.

According to various embodiments, the Wi-Fi module 46 of the Wi-Fi router 404 may generate the UPnP (or DLNA) information message including the UWB operation time information and channel information of the UWB module 41 of the first electronic device 401 and transmit the generated UPnP (or DLNA) information message to all electronic devices (for example, the first electronic device 401, the second electronic device 402, or the third electronic device 403) accessing the network formed by the Wi-Fi module itself in operation 1020-2 and operation 1020-3. For example, the Wi-Fi module 46 of the Wi-Fi router 404 may broadcast the generated UPnP (or DLNA) information message to all electronic devices (for example, the first electronic device 401, the second electronic device 402, or the third electronic device 403) accessing the network.

As described above, the electronic device (for example, the first electronic device 401, the second electronic device 402, or the third electronic device 403) included in the network formed by the Wi-Fi router 404 may stop transmitting and receiving the Wi-Fi signal of the Wi-Fi module 42, 44, or 45 on the basis of operation time information and channel information of the UWB module 41 of the first electronic device 401 included in the UPnP (or DLNA) information message received from the Wi-Fi router 404 in operation 1030-1, operation 1030-2, or operation 1030-3. For example, the electronic device (for example, the first electronic device 401, the second electronic device 402, or the third electronic device 403) included in the network formed by the Wi-Fi router 404 may configure the 802.11 NAV vector for the channel overlapping the channel in which UWB communication or UWB ranging of its own Wi-Fi module 42, 44, or 45 is performed while the UWB communication or the UWB ranging is performed on the basis of operation time and channel information of the UWB module 41 of the first electronic device 401 included in the UPnP (or DLNA) information received from the Wi-Fi router 404.

According to various embodiments, the Wi-Fi module 46 of the Wi-Fi router 404 may stop transmitting and receiving the Wi-Fi signal of the Wi-Fi module 46 on the basis of the UPnP (or DLNA) registration message received from the Wi-Fi module 42 of the first electronic device 401 in operation 1030-4. For example, the Wi-Fi module 46 of the Wi-Fi router 404, the UWB module 41 of the first electronic device 401 may configure the 802.11 NAV vector for the channel overlapping the channel in which UWB communication or UWB ranging is performed while UWB communication or UWB ranging is performed on the basis of operation time information and channel information of the UWB module 41.

According to various embodiments, the UWB module 41 of the first electronic device 401 included in the network may transmit the UWB signal to the UWB module 43 of the second electronic device 402 in operation 1040 while Wi-Fi communication of the first electronic device 401, the second electronic device 402, the third electronic device 403, and the Wi-Fi router 404 is stopped. The UWB module 41 of the electronic device 401 may receive the UWB signal from the UWB module 43 of the second electronic device 402 in operation 1050.

According to the above-described embodiment, when transmitting and receiving the UWB signal, the first electronic device 401 may control transmission and reception of the Wi-Fi signals in the UWB ranging band generated by neighbor devices, and perform UWB communication or UWB ranging with the external device (for example, the second electronic device 402) in the state in which interference due to the Wi-Fi signals is reduced.

According to various embodiments, an electronic device (for example, the electronic device 101 of FIG. 1 or FIG. 2) includes a first communication circuit (for example, the first communication circuit 210 of FIG. 2) configured to support a ultra wide-band (UWB) communication scheme, a second communication circuit (for example, the second communication circuit 220 of FIG. 2) configured to support a Wi-Fi communication scheme, and a processor (for example, the processor 120 of FIG. 1 or FIG. 2) operatively connected to the first communication circuit and the second communication circuit, and the second communication circuit 220 is configured to: acquire operation time information and channel information of the first communication circuit 210 from at least one of the process or the first communication circuit 210; generate a signal for stopping Wi-Fi communication of the second communication circuit 220, based on the acquired operation time information of the first communication circuit 210; transmit the signal for stopping the Wi-Fi communication to at least one external device through at least one channel of the second communication circuit 220 overlapping a channel of the first communication circuit 210, based on the channel information; and stop transmitting and receiving a Wi-Fi signal, based on the operation time information of the first communication circuit 210, and the first communication circuit is configured to transmit a UWB signal to a first external device (for example, the electronic device 102 of FIG. 1) among the at least one external device, based on the operation time information of the first communication circuit 210 while the second communication circuit 220 stops transmitting and receiving the Wi-Fi signal.

According to various embodiments, the second communication circuit 220 may be configured to receive an input of the operation time information and the channel information of the first communication circuit output from the first communication circuit 210.

According to various embodiments, the processor 120 may be configured to, when the operation time information and the channel information of the first communication circuit 210 are acquired from the first communication circuit 210, transfer the operation time information and the channel information of the first communication circuit 210 to the second communication circuit 220 and control the second communication circuit 220 to generate the signal for stopping Wi-Fi communication, based on the operation time information of the first communication circuit 210.

According to various embodiments, the first communication circuit 210 may be configured to acquire operation time information and channel information of a communication circuit supporting a UWB communication scheme of the first external device 102 from the first external device 102, and the second communication circuit 220 may be configured to acquire the operation time information and the channel information of the communication circuit supporting the UWB communication scheme of the first external device 102 as the operation time information and the channel information of the first communication circuit 210.

According to various embodiments, the at least one external device may include a Wi-Fi router (for example, the Wi-Fi router 404 of FIG. 10) and the processor 120 may be configured to control the second communication circuit 220 to transmit a signal for registering UPnP including the operation time information of the first communication circuit 210 to the Wi-Fi router 404.

According to various embodiments, the processor 120 may be configured to form a Wi-Fi Aware cluster with at least some external devices among the at least one external device through the second communication circuit 220, share the operation time information and the channel information of the first communication circuit 210 and operation time information and channel information of a communication circuit supporting a UWB communication scheme of each of at least some external device through a Wi-Fi Aware function, control the second communication circuit 220 to generate a signal for stopping Wi-Fi communication, based on the operation time information and the channel information of the first communication circuit 210 and the communication circuit supporting the UWB communication scheme each of at least some external device, and control the second communication circuit 220 to transmit the signal for stopping Wi-Fi communication to at least some external device belonging to the Wi-Fi Aware cluster.

According to various embodiments, the processor 120 may be configured to control the second communication circuit 220 to transmit the signal for stopping Wi-Fi communication to an external device which does not belong to the Wi-Fi Aware cluster among the at least one external device.

According to various embodiments, the processor 120 may be configured to receive the operation time information and the channel information of the communication circuit supporting the UWB communication scheme of at least some external device through the Wi-Fi Aware function, and transmit the received operation time information and channel information and the operation time information and the channel information of the first communication circuit to at least some external device through the Wi-Fi Aware function to share the operation time information and the channel information of the communication circuit supporting the UWB communication scheme of each of at least some external device belonging to the Wi-Fi Aware cluster.

According to various embodiments, the signal for stopping Wi-Fi communication may include a NAV configuration frame.

According to various embodiments, the processor 120 may be configured to, when a number of channels of the second communication circuit 220 overlapping the channel of the first communication circuit 210 is plural, control the second communication circuit 220 to sequentially transmit the signal for stopping Wi-Fi communication to the at least one external device through the overlapping channels.

According to various embodiments, a method of controlling the electronic device 101 may include an operation of acquiring operation time information and channel information of a first communication circuit 210 supporting a UWB communication scheme of the electronic device 101 from at least one of a process 120 of the electronic device 101 or the first communication circuit 210 by a second communication circuit 220 supporting a Wi-Fi communication scheme, an operation of generating a signal for stopping Wi-Fi communication of the second communication circuit 220, based on the acquired operation time information of the first communication circuit 210, an operation of transmitting the signal for stopping the Wi-Fi communication to at least one external device through at least one channel of the second communication circuit 220 overlapping a channel of the first communication circuit 210, based on the channel information, an operation of stopping transmitting and receiving a Wi-Fi signal of the second communication circuit 220, based on the operation time information of the first communication circuit 210, and an operation of transmitting a UWB signal to a first external device 102 among the at least one external device, based on the operation time information of the first communication circuit 210 while the second communication circuit 220 stops transmitting and receiving the Wi-Fi signal.

According to various embodiments, the second communication circuit 220 may be configured to receive an input of the operation time information and the channel information of the first communication circuit 210 output from the first communication circuit 210.

According to various embodiments, the operation of generating the signal for stopping Wi-Fi communication may include, when the processor 120 of the electronic device 101 acquires the operation time information and the channel information of the first communication circuit 210 are acquired from the first communication circuit 210, transferring the operation time information and the channel information of the first communication circuit 210 to the second communication circuit 220 and generating the signal for stopping Wi-Fi communication, based on the operation time information of the first communication circuit 210 by the second communication circuit 220.

According to various embodiments, the operation of generating the signal for stopping Wi-Fi communication may include acquiring operation time information and channel information of a communication circuit supporting a UWB communication scheme of a first external device 102 from the first external device 102 by the first communication circuit 210 and acquiring the operation time information and the channel information of the communication circuit supporting the UWB communication scheme of the first eternal device 102 as the operation time information and the channel information of the first communication circuit 210 and generating the signal for stopping Wi-Fi communication, based on the operation time information of the first communication circuit 210 by the second communication circuit 220.

According to various embodiments, the at least one external device may include a Wi-Fi router 404, and the method may further include an operation of transmitting a signal for registering UPnP including the operation time information of the first communication circuit 210 to the Wi-Fi router through the second communication circuit 220.

According to various embodiments, the operation of generating the signal for stopping Wi-Fi communication may include forming a Wi-Fi Aware cluster with at least some external devices among the at least one external device through the second communication circuit 220, sharing the operation time information and the channel information of the first communication circuit 210 and operation time information and channel information of a communication circuit supporting a UWB communication scheme of each of at least some external device through a Wi-Fi Aware function, and generating the signal for stopping Wi-Fi communication, based on the operation time information and the channel information of the first communication circuit 210 and the communication circuit supporting the UWB communication scheme of each of at least some external devices by the second communication circuit 220, and the operation of transmitting the signal to the at least one external device may include transmitting the signal for stopping Wi-Fi communication to at least some external devices belonging to the Wi-Fi Aware cluster through the second communication circuit 220.

According to various embodiments, the operation of transmitting the signal to the as least one external device may include transmitting the signal for stopping Wi-Fi communication to an external device which does not belong to the Wi-Fi Aware cluster among the at least one external device through the second communication circuit 220.

According to various embodiments, the operation of sharing may include an operation of receiving the operation time information and the channel information of the communication circuit supporting the UWB communication scheme of at least some external devices through the Wi-Fi Aware function and transmitting the received operation time information and channel information and the operation time information and the channel information of the first communication circuit to at least some external devices through the Wi-Fi Aware function.

According to various embodiments, the signal for stopping Wi-Fi communication may include a NAV configuration frame.

According to various embodiments, the operation of transmitting the signal to the at least one external device may include, when a number of channels of the second communication circuit 220 overlapping the channel of the first communication circuit 210 is plural, sequentially transmitting the signal for stopping Wi-Fi communication to the at least one external device through the overlapping channels of the second communication circuit 220.

According to various embodiments, an electronic device (for example, the electronic device 101 or the first electronic device 401) may include a first communication circuit 120 or 41 configured to support a ultra wide-band (UWB) communication scheme, a second communication circuit 220 or 42 configured to support a Wi-Fi communication scheme, a third communication circuit 91 configured to support a Bluetooth communication scheme, and a processor 120 operatively connected to the first communication circuit 210 or 41, the second communication circuit 220 or 42, and the third communication circuit 91, and the third communication circuit 91 may be configured to transmit a Bluetooth low energy (BLE) frame generated based on operation time and channel information of the first communication circuit 210 or 41 to at least one external device, and the second communication circuit 220 or 42 may be configured to stop transmitting and receiving a Wi-Fi signal through at least one channel of the second communication circuit 220 or 42 overlapping a channel of the first communication circuit 210 or 41, based on the operation time information and the channel information of the first communication circuit 210 or 41 and transmit a UWB signal to a first external device among the at least one external device, based on the operation time information of the first communication circuit 210 or 41 while the second communication circuit 220 or 42 stops transmitting and receiving the Wi-Fi signal.

The electronic device 101 according to various embodiments of the disclosure may be one of various types of electronic devices. The electronic devices may include, for example, a portable communication device (e.g., a smartphone, a tablet PC, e-book, etc.), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., a program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101, 401) comprising:
a first communication circuit (210) configured to support a ultra wide-band, UWB, communication scheme;
a second communication circuit (220) configured to support a Wi-Fi communication scheme; and
a processor (120) operatively connected to the first communication circuit (210) and the second communication circuit (220),
wherein the second communication circuit (220) is configured to:
acquire operation time information and channel information of the first communication circuit (210) from at least one of the processor (120) or the first communication circuit (210),
generate a signal for stopping Wi-Fi communication of the second communication circuit (220), based on the acquired operation time information of the first communication circuit (210),
transmit the signal for stopping the Wi-Fi communication to at least one external device (402, 403, 404) through at least one channel of the second communication circuit (220) overlapping a channel of the first communication circuit (210), based on the channel information, and
stop transmitting and receiving a Wi-Fi signal, based on the operation time information of the first communication circuit (210), and
wherein the first communication circuit (210) is configured to:
transmit a UWB signal to a first external device (402) among the at least one external device (402, 403, 404), based on the operation time information of the first communication circuit (210) while the second communication circuit (220) stops transmitting and receiving the Wi-Fi signal.

2. The electronic device of claim 1, wherein the second communication circuit (220) is configured to receive an input of the operation time information and the channel information of the first communication circuit (210) output from the first communication circuit (210).

3. The electronic device of claim 1, wherein the processor (120) is configured to, based on the operation time information and the channel information of the first communication circuit (210) being acquired from the first communication circuit (210), transfer the operation time information and the channel information of the first communication circuit (210) to the second communication circuit (220), and
control the second communication circuit (220) to generate the signal for stopping Wi-Fi communication, based on the operation time information of the first communication circuit (210) being transferred to the second communication circuit (220).

4. The electronic device of claim 1, wherein the first communication circuit (210) is configured to acquire operation time information and channel information of a communication circuit (43) supporting a UWB communication scheme of a first external device (402) from the first external device (402), and
the second communication circuit (220) is configured to acquire the operation time information and the channel information of the communication circuit (43) supporting the UWB communication scheme of the first external device (402) as the operation time information and the channel information of the first communication circuit (210).

5. The electronic device of claim 1, wherein the at least one external device (402, 403, 404) comprises a Wi-Fi router (404), and
the processor (120) is configured to control the second communication circuit (220) to transmit a signal for registering UPnP including the operation time information of the first communication circuit (210) to the Wi-Fi router (404).

6. The electronic device of claim 1, wherein the processor (120) is configured to form a Wi-Fi Aware cluster with at least some external devices (402) among the at least one external device (402, 403, 404) through the second communication circuit (220),
share the operation time information and the channel information of the first communication circuit (210), and operation time information and channel information of a communication circuit (43) supporting a UWB communication scheme of each of at least some external device (402) through a Wi-Fi Aware function,
control the second communication circuit (220) to generate a signal for stopping Wi-Fi communication, based on the operation time information and the channel information of the first communication circuit (210) and the communication circuit (43) supporting the UWB communication scheme of each of at least some external device (402), and
control the second communication circuit (220) to transmit the signal for stopping Wi-Fi communication to at least some external device (402) included in the Wi-Fi Aware cluster.

7. The electronic device of claim 6, wherein the processor (120) is configured to control the second communication circuit (220) to transmit the signal for stopping Wi-Fi communication to an external device (403) not included in the Wi-Fi Aware cluster among the at least one external device (402).

8. The electronic device of any of claims 6 to 7, wherein the processor (120) is configured to receive the operation time information and the channel information of the communication circuit (43) supporting the UWB communication scheme of at least some external device (402) through the Wi-Fi Aware function, and
transmit the received operation time information and channel information and the operation time information and the channel information of the first communication circuit (210) to at least some external device (402) through the Wi-Fi Aware function to share the operation time information and the channel information of the communication circuit (43) supporting the UWB communication scheme of each of at least some external device (402) included in the Wi-Fi Aware cluster.

9. The electronic device of claim 1, wherein the signal for stopping Wi-Fi communication comprises a NAV configuration frame.

10. The electronic device of claim 1, wherein, based on a number of channels of the second communication circuit (220) overlapping the channel of the first communication circuit (210) being positive, the processor (120) is configured to control the second communication circuit (220) to sequentially transmit the signal for stopping Wi-Fi communication to the at least one external device through the overlapping channels.

11. A method of controlling an electronic device (101, 401) which comprises a first communication circuit (210) supporting a ultra wide-band, UWB, communication scheme and a second communication circuit (220) supporting a Wi-Fi communication scheme, the method comprising:
acquiring, by the second communication circuit, operation time information and channel information of the first communication circuit (210) from at least one of a processor (120) of the electronic device or the first communication circuit (210);
generating, by the second communication circuit, a signal for stopping Wi-Fi communication of the second communication circuit (220), based on the acquired operation time information of the first communication circuit (210);
transmitting, by the second communication circuit, the signal for stopping the Wi-Fi communication to at least one external device (402, 403, 404) through at least one channel of the second communication circuit (220) overlapping a channel of the first communication circuit (210), based on the channel information;
stopping, by the second communication circuit, transmitting and receiving a Wi-Fi signal of the second communication circuit (220), based on the operation time information of the first communication circuit (210); and
transmitting, by the first communication circuit, a UWB signal to a first external device (402) among the at least one external device (402, 403, 404), based on the operation time information of the first communication circuit (210) while the second communication circuit (220) stops transmitting and receiving the Wi-Fi signal.

12. The method of claim 11, wherein the second communication circuit (220) receives an input of the operation time information and the channel information of the first communication circuit (210) output from the first communication circuit (210).

13. The method of claim 11, wherein the generating of the signal for stopping the Wi-Fi communication comprises, based on the operation time information and the channel information of the first communication circuit (210) being acquired from the first communication circuit (210), transferring, by the processor, the operation time information and the channel information of the first communication circuit (210) to the second communication circuit (220), and
generating, by the second communication circuit, the signal for stopping Wi-Fi communication, based on the operation time information of the first communication circuit (210) being transferred to the second communication circuit (220).

14. The method of claim 11, wherein the generating of the signal for stopping Wi-Fi communication comprises
acquiring operation time information and channel information of a communication circuit (43) supporting a UWB communication scheme of a first external device (402) from the first external device (402) by the first communication circuit (210), and
acquiring the operation time information and the channel information of the communication circuit (43) supporting the UWB communication scheme of the first eternal device (402) as the operation time information and the channel information of the first communication circuit (210) and generating the signal for stopping Wi-Fi communication, based on the operation time information of the first communication circuit (210), by the second communication circuit (220).

15. The method of claim 11, wherein the at least one external device (402, 403, 404) comprises a Wi-Fi router (404), and the method further comprises transmitting a signal for registering UPnP including the operation time information of the first communication circuit (210) to the Wi-Fi router (404) through the second communication circuit (220).

## Patentansprüche

1. Elektronische Vorrichtung (101, 401), umfassend:
eine erste Kommunikationsschaltung (210), die so konfiguriert ist, dass sie ein Ultrabreitband-, UWB-,Kommunikationsschema unterstützt;
eine zweite Kommunikationsschaltung (220), die so konfiguriert ist, dass sie ein Wi-Fi-Kommunikationsschema unterstützt;
einen Prozessor (120), der betriebsfähig mit der ersten Kommunikationsschaltung (210) und der zweiten Kommunikationsschaltung (220) verbunden ist,
wobei die zweite Kommunikationsschaltung (220) konfiguriert ist zum:
Erfassen von Betriebszeitinformationen und Kanalinformationen der ersten Kommunikationsschaltung (210) von mindestens einem dem Prozessor (120) oder der ersten Kommunikationsschaltung (210),
Erzeugen eines Signals zum Beenden der Wi-Fi-Kommunikation der zweiten Kommunikationsschaltung (220), basierend auf den erfassten Betriebszeitinformationen der ersten Kommunikationsschaltung (210),
Senden des Signals zum Beenden der Wi-Fi-Kommunikation an mindestens eine externe Vorrichtung (402, 403, 404) über mindestens einen Kanal der zweiten Kommunikationsschaltung (220), der sich mit einem Kanal der ersten Kommunikationsschaltung (210) überschneidet, basierend auf den Kanalinformationen, und
Beenden des Sendens und Empfangens eines Wi-Fi-Signals basierend auf den Betriebszeitinformationen der ersten Kommunikationsschaltung (210), und
wobei die erste Kommunikationsschaltung (210) konfiguriert ist zum:
Senden eines UWB-Signals an eine erste externe Vorrichtung (402) unter der mindestens einen externen Vorrichtung (402, 403, 404), basierend auf den Betriebszeitinformationen der ersten Kommunikationsschaltung (210), während die zweite Kommunikationsschaltung (220) das Senden und Empfangen des Wi-Fi-Signals beendet.

2. Elektronische Vorrichtung nach Anspruch 1, wobei die zweite Kommunikationsschaltung (220) konfiguriert ist, um eine Eingabe der Betriebszeitinformationen und der Kanalinformationen der ersten Kommunikationsschaltung (210) zu empfangen, die von der ersten Kommunikationsschaltung (210) ausgegeben wird.

3. Elektronische Vorrichtung nach Anspruch 1, wobei der Prozessor (120) konfiguriert ist, um basierend auf den Betriebszeitinformationen und den Kanalinformationen der ersten Kommunikationsschaltung (210), die von der ersten Kommunikationsschaltung (210) erfasst werden, die Betriebszeitinformationen und die Kanalinformationen der ersten Kommunikationsschaltung (210) an die zweite Kommunikationsschaltung (220) zu senden, und
Steuern der zweiten Kommunikationsschaltung (220), um das Signal zum Beenden der Wi-Fi-Kommunikation zu erzeugen, basierend auf den Betriebszeitinformationen der ersten Kommunikationsschaltung (210), die an die zweite Kommunikationsschaltung (220) übertragen werden.

4. Elektronische Vorrichtung nach Anspruch 1, wobei die erste Kommunikationsschaltung (210) konfiguriert ist, um Betriebszeitinformationen und Kanalinformationen einer Kommunikationsschaltung (43), die ein UWB-Kommunikationsschema einer ersten externen Vorrichtung (402) unterstützt, von der ersten externen Vorrichtung (402) zu erfassen, und
wobei die zweite Kommunikationsschaltung (220) konfiguriert ist, um die Betriebszeitinformationen und die Kanalinformationen der Kommunikationsschaltung (43), die das UWB-Kommunikationsschema der ersten externen Vorrichtung (402) unterstützt, als die Betriebszeitinformationen und die Kanalinformationen der ersten Kommunikationsschaltung (210) zu erfassen.

5. Elektronische Vorrichtung nach Anspruch 1, wobei die mindestens eine externe Vorrichtung (402, 403, 404) einen Wi-Fi-Router (404) umfasst, und
der Prozessor (120) so konfiguriert ist, dass er die zweite Kommunikationsschaltung (220) steuert, um ein Signal zur Registrierung von UPnP, das die Betriebszeitinformationen der ersten Kommunikationsschaltung (210) umfasst, an den Wi-Fi-Router (404) zu senden.

6. Elektronische Vorrichtung nach Anspruch 1, wobei der Prozessor (120) so konfiguriert ist, dass er über die zweite Kommunikationsschaltung (220) einen Wi-Fi Aware-Cluster mit mindestens einigen externen Vorrichtungen (402) unter der mindestens einen externen Vorrichtung (402, 403, 404) bildet,
die Betriebszeitinformationen und die Kanalinformationen der ersten Kommunikationsschaltung (210) und die Betriebszeitinformationen und die Kanalinformationen einer Kommunikationsschaltung (43), die ein UWB-Kommunikationsschema jeder der mindestens einigen externen Vorrichtungen (402) unterstützt, über eine Wi-Fi Aware-Funktion gemeinsam nutzt,
die zweite Kommunikationsschaltung (220) zum Erzeugen eines Signals zum Beenden der Wi-Fi-Kommunikation steuert, basierend auf den Betriebszeitinformationen und den Kanalinformationen der ersten Kommunikationsschaltung (210) und der Kommunikationsschaltung (43), die das UWB-Kommunikationsschema jeder der mindestens einigen externen Vorrichtungen (402) unterstützt, und
die zweite Kommunikationsschaltung (220) so zu steuern, dass sie das Signal zum Beenden der Wi-Fi-Kommunikation an mindestens einige externe Vorrichtungen (402) sendet, die das Wi-Fi Aware-Cluster umfassen.

7. Elektronische Vorrichtung nach Anspruch 6, wobei der Prozessor (120) so konfiguriert ist, dass er die zweite Kommunikationsschaltung (220) so steuert, dass sie das Signal zum Beenden der Wi-Fi-Kommunikation an eine externe Vorrichtung (403) sendet, die nicht in dem Wi-Fi Aware-Cluster unter der mindestens einen externen Vorrichtung (402) enthalten ist.

8. Elektronische Vorrichtung nach einem der Ansprüche 6 bis 7, wobei der Prozessor (120) so konfiguriert ist, dass er die Betriebszeitinformationen und die Kanalinformationen der Kommunikationsschaltung (43), die das UWB-Kommunikationsschema mindestens einiger externer Vorrichtungen (402) unterstützt, über die Wi-Fi Aware-Funktion empfängt, und
die empfangenen Betriebszeitinformationen und Kanalinformationen und die Betriebszeitinformationen und die Kanalinformationen der ersten Kommunikationsschaltung (210) über die Wi-Fi Aware-Funktion an mindestens einige externe Vorrichtungen (402) sendet, um die Betriebszeitinformationen und die Kanalinformationen der Kommunikationsschaltung (43), die das UWB-Kommunikationsschema jeder der mindestens einigen externen Vorrichtungen (402), die in dem Wi-Fi Aware-Cluster enthalten sind, unterstützt, gemeinsam zu nutzen.

9. Elektronische Vorrichtung nach Anspruch 1, wobei das Signal zum Beenden der Wi-Fi-Kommunikation einen NAV-Konfigurationsrahmen umfasst.

10. Elektronische Vorrichtung nach Anspruch 1, wobei der Prozessor (120), basierend auf einer positiven Anzahl von Kanälen der zweiten Kommunikationsschaltung (220), die den Kanal der ersten Kommunikationsschaltung (210) überlappen, konfiguriert ist, um die zweite Kommunikationsschaltung (220) zu steuern, um das Signal zum Beenden der Wi-Fi-Kommunikation an die mindestens eine externe Vorrichtung über die überlappenden Kanäle sequentiell zu senden.

11. Verfahren zum Steuern einer elektronischen Vorrichtung (101, 401), die eine erste Kommunikationsschaltung (210), die ein Ultrabreitband-, UWB-,Kommunikationsschema unterstützt, und eine zweite Kommunikationsschaltung (220) umfasst, die ein Wi-Fi-Kommunikationsschema unterstützt, wobei das Verfahren umfasst:
Erfassen, durch die zweite Kommunikationsschaltung, von Betriebszeitinformationen und Kanalinformationen der ersten Kommunikationsschaltung (210) von mindestens einem eines Prozessors (120) der elektronischen Vorrichtung oder der ersten Kommunikationsschaltung (210);
Erzeugen, durch die zweite Kommunikationsschaltung, eines Signals zum Beenden der Wi-Fi-Kommunikation der zweiten Kommunikationsschaltung (220), basierend auf den erfassten Betriebszeitinformationen der ersten Kommunikationsschaltung (210);
Senden, durch die zweite Kommunikationsschaltung, des Signals zum Beenden der Wi-Fi-Kommunikation an mindestens eine externe Vorrichtung (402, 403, 404) über mindestens einen Kanal der zweiten Kommunikationsschaltung (220), der sich mit einem Kanal der ersten Kommunikationsschaltung (210) überschneidet, basierend auf den Kanalinformationen;
Beenden, durch die zweite Kommunikationsschaltung, des Sendens und Empfangens eines Wi-Fi-Signals der zweiten Kommunikationsschaltung (220), basierend auf den Betriebszeitinformationen der ersten Kommunikationsschaltung (210); und
Senden, durch die erste Kommunikationsschaltung, eines UWB-Signals an eine erste externe Vorrichtung (402) unter der mindestens einen externen Vorrichtung (402, 403, 404), basierend auf den Betriebszeitinformationen der ersten Kommunikationsschaltung (210), während die zweite Kommunikationsschaltung (220) das Senden und Empfangen des Wi-Fi-Signals beendet.

12. Verfahren nach Anspruch 11, wobei die zweite Kommunikationsschaltung (220) eine Eingabe der Betriebszeitinformationen und der Kanalinformationen der ersten Kommunikationsschaltung (210) empfängt, die von der ersten Kommunikationsschaltung (210) ausgegeben wird.

13. Verfahren nach Anspruch 11, wobei das Erzeugen des Signals zum Beenden der Wi-Fi-Kommunikation basierend auf den Betriebszeitinformationen und den Kanalinformationen der ersten Kommunikationsschaltung (210), die von der ersten Kommunikationsschaltung (210) erfasst werden, das Senden der Betriebszeitinformationen und der Kanalinformationen der ersten Kommunikationsschaltung (210) durch den Prozessor an die zweite Kommunikationsschaltung (220) umfasst, und
Erzeugen des Signals zum Beenden der Wi-Fi-Kommunikation durch die zweite Kommunikationsschaltung, basierend auf den Betriebszeitinformationen der ersten Kommunikationsschaltung (210), die an die zweite Kommunikationsschaltung (220) übertragen werden.

14. Verfahren nach Anspruch 11, wobei das Erzeugen des Signals zum Beenden der Wi-Fi-Kommunikation Folgendes umfasst:
Erfassen von Betriebszeitinformationen und Kanalinformationen einer Kommunikationsschaltung (43), die ein UWB-Kommunikationsschema einer ersten externen Vorrichtung (402) unterstützt, von der ersten externen Vorrichtung (402) durch die erste Kommunikationsschaltung (210), und
Erfassen der Betriebszeitinformationen und Kanalinformationen der Kommunikationsschaltung (43), die das UWB-Kommunikationsschema der ersten externen Vorrichtung (402) unterstützt, als die Betriebszeitinformationen und die Kanalinformationen der ersten Kommunikationsschaltung (210) und Erzeugen des Signals zum Beenden der Wi-Fi-Kommunikation, basierend auf den Betriebszeitinformationen der ersten Kommunikationsschaltung (210), durch die zweite Kommunikationsschaltung (220).

15. Verfahren nach Anspruch 11, wobei die mindestens eine externe Vorrichtung (402, 403, 404) einen Wi-Fi-Router (404) umfasst, und das Verfahren ferner das Senden eines Signals zum Registrieren von UPnP einschließlich der Betriebszeitinformationen der ersten Kommunikationsschaltung (210) an den Wi-Fi-Router (404) über die zweite Kommunikationsschaltung (220) umfasst.

## Revendications

1. Dispositif électronique (101, 401) comprenant :
un premier circuit de communication (210) configuré pour prendre en charge un schéma de communication à bande ultra large, UWB ;
un second circuit de communication (220) configuré pour prendre en charge un schéma de communication Wi-Fi ; et
un processeur (120) connecté de manière opérationnelle au premier circuit de communication (210) et au second circuit de communication (220),
dans lequel le second circuit de communication (220) est configuré pour :
acquérir des informations de temps d'opération et des informations de canal du premier circuit de communication (210) à partir d'au moins un du processeur (120) ou du premier circuit de communication (210),
générer un signal d'arrêt de la communication Wi-Fi du second circuit de communication (220), en se basant sur les informations de temps d'opération acquises du premier circuit de communication (210),
transmettre le signal d'arrêt de la communication Wi-Fi à au moins un dispositif externe (402, 403, 404) par l'intermédiaire d'au moins un canal du second circuit de communication (220) chevauchant un canal du premier circuit de communication (210), sur la base des informations de canal, et
arrêter l'émission et la réception d'un signal Wi-Fi, en se basant sur les informations de temps d'opération du premier circuit de communication (210), et
dans lequel le premier circuit de communication (210) est configuré pour :
transmettre un signal UWB à un premier dispositif externe (402) parmi l'au moins un dispositif externe (402, 403, 404), en se basant sur les informations de temps d'opération du premier circuit de communication (210) pendant que le second circuit de communication (220) arrête de transmettre et de recevoir le signal Wi-Fi.

2. Dispositif électronique de la revendication 1, dans lequel le second circuit de communication (220) est configuré pour recevoir une entrée des informations de temps d'opération et des informations de canal du premier circuit de communication (210) en sortie du premier circuit de communication (210).

3. Dispositif électronique de la revendication 1, dans lequel le processeur (120) est configuré pour, en se basant sur les informations de temps d'opération et les informations de canal du premier circuit de communication (210) acquises à partir du premier circuit de communication (210), transférer les informations de temps d'opération et les informations de canal du premier circuit de communication (210) au second circuit de communication (220), et
commander le second circuit de communication (220) pour générer le signal d'arrêt de la communication Wi-Fi, en se basant sur les informations de temps d'opération du premier circuit de communication (210) transférées au second circuit de communication (220).

4. Dispositif électronique de la revendication 1, dans lequel le premier circuit de communication (210) est configuré pour acquérir des informations de temps d'opération et des informations de canal d'un circuit de communication (43) prenant en charge un schéma de communication UWB d'un premier dispositif externe (402) à partir du premier dispositif externe (402), et
le second circuit de communication (220) est configuré pour acquérir les informations de temps d'opération et les informations de canal du circuit de communication (43) prenant en charge le schéma de communication UWB du premier dispositif externe (402) en tant qu'informations de temps d'opération et informations de canal du premier circuit de communication (210).

5. Dispositif électronique de la revendication 1, dans lequel l'au moins un dispositif externe (402, 403, 404) comprend un routeur Wi-Fi (404), et
le processeur (120) est configuré pour commander le second circuit de communication (220) afin de transmettre au routeur Wi-Fi (404) un signal d'enregistrement l'UPnP comprenant les informations de temps d'opération du premier circuit de communication (210).

6. Dispositif électronique de la revendication 1, dans lequel le processeur (120) est configuré pour former un cluster Wi-Fi Aware avec au moins certains dispositifs externes (402) parmi l'au moins un dispositif externe (402, 403, 404) à travers le second circuit de communication (220),
partager les informations de temps d'opération et les informations de canal du premier circuit de communication (210), ainsi que les informations de temps d'opération et les informations de canal d'un circuit de communication (43) prenant en charge un schéma de communication UWB de chacun d'au moins certains dispositifs externes (402) par l'intermédiaire d'une fonction Wi-Fi Aware,
commander le second circuit de communication (220) pour générer un signal d'arrêt de la communication Wi-Fi, basé sur les informations de temps d'opération et les informations de canal du premier circuit de communication (210) et du circuit de communication (43) prenant en charge le schéma de communication UWB de chacun d'au moins certains dispositifs externes (402), et
commander le second circuit de communication (220) pour transmettre le signal d'arrêt de la communication Wi-Fi à au moins certains dispositifs externes (402) inclus dans le cluster Wi-Fi Aware.

7. Dispositif électronique de la revendication 6, dans lequel le processeur (120) est configuré pour commander le second circuit de communication (220) afin de transmettre le signal d'arrêt de la communication Wi-Fi à un dispositif externe (403) non inclus dans le cluster Wi-Fi Aware parmi l'au moins un dispositif externe (402).

8. Dispositif électronique de l'une quelconque des revendications 6 à 7, dans lequel le processeur (120) est configuré pour recevoir les informations de temps d'opération et les informations de canal du circuit de communication (43) prenant en charge le schéma de communication UWB d'au moins certains dispositifs externes (402) par l'intermédiaire de la fonction Wi-Fi Aware, et
transmettre les informations de temps d'opération et les informations de canal reçues ainsi que les informations de temps d'opération et les informations de canal du premier circuit de communication (210) à au moins certains dispositifs externes (402) par l'intermédiaire de la fonction Wi-Fi Aware pour partager les informations de temps d'opération et les informations de canal du circuit de communication (43) prenant en charge le schéma de communication UWB de chacun d'au moins certains dispositifs externes (402) inclus dans le cluster Wi-Fi Aware.

9. Dispositif électronique de la revendication 1, dans lequel le signal d'arrêt de la communication Wi-Fi comprend une trame de configuration NAV.

10. Dispositif électronique de la revendication 1, dans lequel, sur la base d'un nombre de canaux du second circuit de communication (220) chevauchant le canal du premier circuit de communication (210) étant positif, le processeur (120) est configuré pour commander le second circuit de communication (220) afin de transmettre séquentiellement le signal d'arrêt de la communication Wi-Fi à l'au moins un dispositif externe par le biais des canaux chevauchants.

11. Procédé de commande d'un dispositif électronique (101, 401) comprenant un premier circuit de communication (210) prenant en charge un schéma de communication à bande ultra large, UWB, et un second circuit de communication (220) prenant en charge un schéma de communication Wi-Fi, le procédé comprenant :
acquérir, par le second circuit de communication, des informations de temps d'opération et des informations de canal du premier circuit de communication (210) à partir d'au moins un d'un processeur (120) du dispositif électronique ou du premier circuit de communication (210) ;
générer, par le second circuit de communication, un signal d'arrêt de la communication Wi-Fi du second circuit de communication (220), en se basant sur les informations de temps d'opération acquises du premier circuit de communication (210) ;
transmettre, par le second circuit de communication, le signal d'arrêt de la communication Wi-Fi à au moins un dispositif externe (402, 403, 404) par l'intermédiaire d'au moins un canal du second circuit de communication (220) chevauchant un canal du premier circuit de communication (210), sur la base des informations de canal ;
arrêter, par le second circuit de communication, l'émission et la réception d'un signal Wi-Fi du second circuit de communication (220), en se basant sur les informations de temps d'opération du premier circuit de communication (210) ; et
transmettre, par le premier circuit de communication, un signal UWB à un premier dispositif externe (402) parmi l'au moins un dispositif externe (402, 403, 404), en se basant sur les informations de temps d'opération du premier circuit de communication (210) pendant que le second circuit de communication (220) arrête de transmettre et de recevoir le signal Wi-Fi.

12. Procédé de la revendication 11, dans lequel le second circuit de communication (220) reçoit une entrée des informations de temps d'opération et des informations de canal du premier circuit de communication (210) en sortie du premier circuit de communication (210).

13. Procédé de la revendication 11, dans lequel la génération du signal d'arrêt de la communication Wi-Fi comprend, en se basant sur les informations de temps d'opération et les informations de canal du premier circuit de communication (210) acquises à partir du premier circuit de communication (210), le transfert, par le processeur, des informations de temps d'opération et des informations de canal du premier circuit de communication (210) au second circuit de communication (220), et
la génération, par le second circuit de communication, du signal d'arrêt de la communication Wi-Fi, en se basant sur les informations de temps d'opération du premier circuit de communication (210) transférées au second circuit de communication (220).

14. Procédé de la revendication 11, dans lequel la génération du signal d'arrêt de la communication Wi-Fi comprend :
acquérir des informations de temps d'opération et de canal d'un circuit de communication (43) prenant en charge un schéma de communication UWB d'un premier dispositif externe (402) à partir du premier dispositif externe (402) par le premier circuit de communication (210), et
acquérir les informations de temps d'opération et les informations de canal du circuit de communication (43) prenant en charge le schéma de communication UWB du premier dispositif externe (402) en tant qu'informations de temps d'opération et informations de canal du premier circuit de communication (210) et générer le signal d'arrêt de la communication Wi-Fi, en se basant sur les informations de temps d'opération du premier circuit de communication (210), par le second circuit de communication (220).

15. Procédé de la revendication 11, dans lequel l'au moins un dispositif externe (402, 403, 404) comprend un routeur Wi-Fi (404), et le procédé comprend en outre la transmission d'un signal d'enregistrement l'UPnP comprenant les informations de temps d'opération du premier circuit de communication (210) au routeur Wi-Fi (404) par l'intermédiaire du second circuit de communication (220).
